(19) Europäisches Patentamt
European Patent Office
Office européen des brevets

(11) **EP 2 935 387 B1**

(12) **EUROPÄISCHE PATENTSCHRIFT**

(45) Veröffentlichungstag und Bekanntmachung des Hinweises auf die Patenterteilung:
**15.03.2017 Patentblatt 2017/11**

(51) Int Cl.:
*C08G 18/56* *(2006.01)*          *C08G 18/71* *(2006.01)*
*C08G 2/28* *(2006.01)*

(21) Anmeldenummer: **13805383.0**

(22) Anmeldetag: **16.12.2013**

(86) Internationale Anmeldenummer:
**PCT/EP2013/076642**

(87) Internationale Veröffentlichungsnummer:
**WO 2014/095679 (26.06.2014 Gazette 2014/26)**

(54) **NCO-MODIFIZIERTE POLYOXYMETHYLEN-BLOCK-COPOLYMERE**

NCO MODIFIED POLYOXYMETHYLENE BLOCK COPOLYMERS

COPOLYMÈRES EN BLOC DE POLYOXYMÉTHYLÈNE MODIFIÉS PAR NCO

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2012 EP 12199059**

(43) Veröffentlichungstag der Anmeldung:
**28.10.2015 Patentblatt 2015/44**

(73) Patentinhaber: **Covestro Deutschland AG**
**51373 Leverkusen (DE)**

(72) Erfinder:
• **MÜLLER, Thomas Ernst**
**52062 Aachen (DE)**
• **GÜRTLER, Christoph**
**50735 Köln (DE)**
• **LEITNER, Walter**
**52074 Aachen (DE)**
• **VOGT, Henning**
**52066 Aachen (DE)**
• **BARATH, Gabor**
**52076 Aachen (DE)**

(74) Vertreter: **Levpat**
**c/o Covestro AG**
**Gebäude 4825**
**51365 Leverkusen (DE)**

(56) Entgegenhaltungen:
GB-A- 807 589      GB-A- 1 164 997
US-A- 4 352 914      US-A- 4 535 127

## Beschreibung

Die vorliegende Erfindung betrifft ein Verfahren zur Herstellung von NCO-modifizierten Polyoxymethylen-Block-Copolymeren, umfassend den Schritt der Polymerisation von Formaldehyd in einem Reaktionsgefäß in Gegenwart eines Katalysators, wobei die Polymerisation von Formaldehyd weiterhin in Gegenwart einer Starterverbindung mit mindestens 2 Zerewitinoffaktiven H-Atomen unter Erhalt eines Zwischenprodukts erfolgt und dieses mit einem Isocyanat umgesetzt wird. Sie betrifft weiterhin durch ein solches Verfahren erhältliche NCO-modifizierte Polyoxymethylen-Block-Copolymere sowie deren Verwendung zur Herstellung von Polyurethan-Polymeren.

GB 1164997 beschreibt die Verknüpfung von Polyoxypropylen-Polyolen mit Formaldehyd unter Bildung von Acetal-Einheiten zu Polyolen mit einer Funktionalität > 3. Die eingesetzten Brönstedtsauren Katalysatoren eignen sich jedoch nicht zur Polymerisation von Formaldehyd und auch aufgrund der beschriebenen molaren Verhältnisse von Formaldehyd zu Polyol können die offenbarten Produkte keine Block-Copolymer-Struktur aufweisen.

GB 807589 beschreibt Block-Copolymere, enthaltend Polyoxymethylen-Einheiten neben anderen Polymerisat- und Polykondensat-Einheiten. Die beschriebenen Block-Copolymere weisen ein Molekulargewicht $\geq$ 4 500 g/mol auf. Jedoch sind Polymere mit hohem Molekulargewicht für den Einsatz als Polyurethanbaustein nicht geeignet.

EP 1 418 190 A1 beschreibt Copolymere aus Polyetherdiolen und Formaldehyd mit einem Molekulargewicht $\geq$ 15 000 g/mol. Auch diese Polymere sind auf Grund des hohen Molekulargewichts für den Einsatz als Polyurethanbaustein nicht geeignet.

US 3,754,053 beschreibt Block-Copolymere mit einem Molekulargewicht $\geq$ 10 000 g/mol, enthaltend mindestens ein Polyoxymethylen-Segment und mindestens zwei Polyoxyalkylen-Segmente. Die beschriebenen Block-Copolymere sind grundsätzlich auf eine maximale Funktionalität von F $\leq$ 2 beschränkt. Für die Polyurethan-Anwendungen ist jedoch neben Polymeren mit einer Funktionalität von F = 2 besonders auch der Zugang zu Polymeren mit einer Funktionalität F > 2 interessant. Auch hier sind die beschriebenen Polymere aufgrund ihres hohen Molekulargewichts für Anwendungen als Polyurethanbaustein ungeeignet.

US 4,352,914 beschreibt spezielle Methylol (=Halbacetal)-Derivate von Bisphenolen und Ketonen, welche durch Umsetzung besagter Bisphenole bzw. Ketone mit Formaldehyd hergestellt werden und als Gemisch mit höhermolekularen Kondensationsprodukten besagter Methylol-Derivate erhalten werden. Die so erhaltenen Produkte weisen keine Block-Copolymer-Struktur auf.

In US 2002/0016395 und JP 04-306215 werden Block-Copolymere beschrieben, die Polyoxymethylen-Einheiten und Polyolefin-Einheiten enthalten. Auch hier besitzen die erfindungsgemäßen Produkte Molekulargewichte $\geq$ 10 000 g/mol und sind somit für den Einsatz als Polyurethanbaustein ungeeignet.

Alle beschriebenen Polyoxymethylen-haltigen Block-Copolymere weisen Molekulargewichte $\geq$ 4 500 g/mol auf und sind aufgrund der hiermit einhergehenden Eigenschaften (hohe Viskosität, niedrige massenbezogene Funktionalität) nicht für den Einsatz als Präpolymere im Polyurethanbereich geeignet. Ebenfalls werden die mechanischen Eigenschaften der daraus hergestellten Polyurethane bei Einsatz von hochmolekularen Diolen und Polyolen herabgesetzt.

US 3,575,930 beschreibt die Reaktion von Dihydroxy-terminiertem Paraformaldehyd $HO(CH_2O)_nH$ mit n = 2-64 mit Diisocyanaten zu Isocyanat-terminierten Polyoxymethylenpolymeren, welche in der Reaktion mit Diolen zu Polyurethanen umgesetzt werden können. Das eingesetzte Paraformaldehyd unterscheidet sich aufgrund des Fehlens zusätzlicher oligomerer Einheiten und seiner hohen Teilkristallinität grundsätzlich von den erfindungsgemäßen Polyoxymethylen-Block-Copolymeren, was sich in physikalischen Eigenschaften wie Glasübergangstemperatur, Schmelzpunkt und Viskosität niederschlägt.

Niedermolekulare bi- oder höherfunktionelle Block-Copolymere, die Polyoxymethylen-Einheiten neben anderen oligomeren Struktureinheiten enthalten, sind nicht bekannt. Weiterhin ist die Umsetzung von Block-Copolymeren enthaltend Polyoxymethylen-Einheiten mit Isocyanaten zur Herstellung von Polyurethanen unbekannt.

Es bestand daher die Aufgabe, Polyoxymethylen-Block-Copolymere für Polyurethan-Anwendungen bereitzustellen, die mit Isocyanaten reagieren und somit im Polyurethan-Bereich Anwendung finden können.

Erfindungsgemäß gelöst wurde diese Aufgabe durch ein Verfahren zur Herstellung von NCO-modifizierten Polyoxymethylen-Block-Copolymeren, umfassend den Schritt der Polymerisation von Formaldehyd in Gegenwart eines Katalysators, wobei die Polymerisation von Formaldehyd weiterhin in Gegenwart einer Starterverbindung mit mindestens 2 Zerewitinoff-aktiven H-Atomen erfolgt, wobei ein Zwischenprodukt mit einem zahlenmittleren Molekulargewicht von < 4500 g/mol erhalten wird und das erhaltene Zwischenprodukt mit einem Isocyanat zu einem NCO-modifizierten Polyoxymethylen-Block-Copolymer umgesetzt wird.

Überraschend wurde gefunden, dass die erhaltenen Polyoxymethylen-Block-Copolymere direkt im Anschluss an ihre Herstellung (*in situ*), oder nach Isolierung (*ex situ*) mit Isocyanaten zu Polyurethan-analogen Verbindungen umgesetzt werden können, ohne dass die Zugabe zusätzlicher Katalysatoren oder sonstiger Additive notwendig ist. Die erhaltenen niedermolekularen Polyoxymethylen-Block-Copolymere bieten gegenüber existierenden bi- oder höherfunktionellen Polymeren eine Reihe von Vorteilen. So können bestimmte physikalische Eigenschaften wie Glasübergangstemperaturen, Schmelzbereiche und Viskositäten über die Länge der Polyoxymethylen-Blöcke im Verhältnis zu den zusätzlichen Oligomeren gezielt angesteuert werden.

Gegenüber Polyoxymethylen-Homopolymeren gleichen Molekulargewichts ist die Teilkristallinität in den erfindungsgemäßen Polyoxymethylen-Block-Copolymeren typischerweise herabgesetzt, was üblicherweise ebenfalls zu einer Herabsetzung von Glasübergangstemperaturen, Schmelzpunkten und Viskositäten führt. Die Anwesenheit von zusätzlichen, aus einem Startermolekül stammenden Oligomer-Blöcken führt weiterhin typischerweise zu einer Erhöhung der chemischen und thermischen Stabilität.

Polyoxymethylen-Homopolymere sind typischerweise auf eine Funktionalität $F \leq 2$ beschränkt. Über den Einsatz von Starterverbindungen mit einer Funktionalität $F \geq 2$ (beispielsweise $\geq 3$) ist im Gegensatz dazu der Zugang zu Polyoxymethylen-Block-Copolymeren mit einer Funktionalität $F \geq 2$ möglich.

Gegenüber Polyetherpolyolen gleichen Molekulargewichts ist der Anteil an Polyoxyalkylen-Einheiten, die aus den entsprechenden Alkylenoxiden hergestellt werden, um den Polyoxymethylen-Anteil verringert, was zu einer vorteilhaften Energiebilanz des Produktes führt. Physikalische Eigenschaften wie Glasübergangstemperaturen, Schmelzbereiche und Viskositäten können für ein gegebenes Molekulargewicht über die Länge der Polyoxymethylen-Blöcke im Verhältnis zu den Polyether-Blöcken gezielt angesteuert werden.

Polyoxymethylen-Block-Copolymere im Sinne der Erfindung bezeichnen polymere Verbindungen, die mindestens einen Polyoxymethylen-Block sowie mindestens einen zusätzlichen oligomeren Block enthalten und vorzugsweise ein im mittleren vierstelligen Bereich liegendes Molekulargewicht nicht überschreiten.

Ein Polyoxymethylen-Block im Sinne der Erfindung umfasst mindestens eine und vorzugsweise höchstens 150 direkt miteinander verknüpfte Oxymethylen-Einheiten. Ein zusätzlicher oligomerer Block im Sinne der Erfindung unterscheidet sich strukturell von einem Polyoxymethylen-Block und ist aus von Formaldehyd verschiedenen Monomeren aufgebaut, wobei das Vorhandensein von Oxymethylen-Gruppen im zusätzlichen oligomeren Block nicht ausgeschlossen wird. Der Einbau des zusätzlichen oligomeren Blocks kann im Sinne der Erfindung in einfacher Weise durch den Einsatz von oligomeren Starterverbindungen erfolgen. Die oligomere Starterverbindung wird dann als zusätzlicher oligomerer Block in das erfindungsgemäße Polyoxymethylen-Block-Copolymer eingebaut oder ist Bestandteil des zusätzlichen oligomeren Blocks. Die oligomere Starterverbindung kann gegebenenfalls unmittelbar vor dem erfindungsgemäßen Schritt der Polymerisation von Formaldehyd aus den Monomeren und ggf. einer Starterverbindung mit geringerem Molekulargewicht aufgebaut werden. Die Eigenschaften des oligomeren Blocks können über die Anzahl und Art der enthaltenen Monomere eingestellt werden.

Als Zwischenprodukt im erfindungsgemäßen Sinne wird das Reaktionsprodukt nach der Umsetzung der Starterverbindung mit Formaldehyd verstanden, welches durch das erfindungsgemäße Verfahren leicht auf ein zahlenmittleres Molekulargewicht von < 4500 g/mol eingestellt werden kann. Formaldehyd kann in gasförmigem Zustand, ggf. als Mischung mit Inertgasen wie z.B. Stickstoff oder Argon und/oder mit gasförmigem, überkritischem oder flüssigem Kohlendioxid oder als Formaldehyd-Lösung eingesetzt werden. Bei FormaldehydLösungen kann es sich um wässrige Formaldehyd-Lösungen mit einem Formaldehyd-Gehalt zwischen 1 Gew.% und 37 Gew.% handeln, die gegebenenfalls bis zu 15 Gew.% Methanol als Stabilisator enthalten können. Alternativ können Lösungen von Formaldehyd in polaren organischen Lösungsmitteln wie z.B. Methanol oder höheren ein- oder mehrwertigen Alkoholen, 1,4-Dioxan, Acetonitril, *N,N*-Dimethylformamid (DMF), *N,N*-Dimethylacetamid, Dimethylsulfoxid (DMSO), zyklischen Carbonaten, z.B. Ethylencarbonat oder Propylencarbonat, *N*-Methylpyrrolidon (NMP), Sulfolan, Tetramethylharnstoff, *N,N'*-Dimethylethylenharnstoff oder Mischungen derselben untereinander, mit Wasser und/oder anderen Lösungsmitteln eingesetzt werden. Die Anwesenheit weiterer Substanzen in Lösung ist ebenfalls mit eingeschlossen. Bevorzugt ist der Einsatz von gasförmigem Formaldehyd. Besonders bevorzugt ist der Einsatz von Gemischen von gasförmigem Formaldehyd mit Argon und/oder Kohlendioxid. Ebenfalls bevorzugt ist der Einsatz von Lösungen von Formaldehyd in aprotischen polaren organischen Lösungsmitteln wie z.B. 1,4-Dioxan, Acetonitril, *N,N*-Dimethylformamid (DMF), *N,N*-Dimethylacetamid, Dimethylsulfoxid (DMSO), zyklischen Carbonaten, z.B. Ethylencarbonat oder Propylencarbonat, *N*-Methylpyrrolidon (NMP), Sulfolan, Tetramethylharnstoff, *N,N'*-Dimethylethylenharnstoff oder Mischungen derselben untereinander, und/oder anderen Lösungsmitteln.

Alternativ kann Formaldehyd *in situ* aus einer geeigneten Formaldehyd-Quelle generiert werden. Als Formaldehyd-Quelle können Substanzen zum Einsatz kommen, welche chemisch gebundenen Formaldehyd, üblicherweise in Form von Oxymethylen-Gruppen, enthalten, und die unter geeigneten Bedingungen in der Lage sind, Formaldehyd freizusetzen. Geeignete Bedingungen für die Freisetzung können z.B. erhöhte Temperaturen und/oder den Einsatz von Katalysatoren und/oder die Gegenwart von Säuren, Basen oder anderen Reagenzien, die zu der Freisetzung von monomerem Formaldehyd führen, beinhalten. Bevorzugte Formaldehyd-Quellen sind 1,3,5-Trioxan, Paraformaldehyd, Polyoxymethylen, Dimethylacetal, 1,3-Dioxolan, 1,3-Dioxan und/oder 1,3-Dioxepan, besonders bevorzugt sind 1,3,5-Trioxan und Paraformaldehyd.

Bei den Starterverbindungen handelt es sich im Sinne der Erfindung um bi- oder höherfunktionelle Verbindungen mit einem zahlenmittleren Molekulargewicht $M_n$ von beispielsweise zwischen 100 und 3 000 g/mol. Die Funktionalität wird über terminale oder entlang der Polymerkette angeordnete, Heteroatome enthaltende, deprotonierbare funktionelle Gruppen wie beispielsweise Hydroxygruppen, Thiolgruppen, Aminogruppen, Carbonsäuregruppen oder Carbonsäurederivate wie z.B. Amide hergestellt. An N, O oder S gebundener Wasserstoff wird als Zerewitinoff-aktiver Wasserstoff (oder als "aktiver Wasserstoff) bezeichnet, wenn er nach einem von Zerewitinoff aufgefundenen Verfahren durch Umsetzung mit Methylmagnesiumiodid Methan liefert. Die Starterverbindungen haben typischerweise eine Funktionalität $\geq 2$, beispielsweise in einem Bereich von $\geq 2$ bis $\leq 6$, vorzugsweise von $\geq 2$ bis $\leq 4$ und besonders bevorzugt von $\geq 2$ bis $\leq 3$.

Als Lösungsmittel können beispielsweise Wasser, Methanol oder höhere ein- oder mehrwertige Alkohole, unpolare organische Lösungsmittel wie z.B. lineare oder verzweigte Alkane oder AlkanGemische, Toluol, die verschiedenen Xylol-Isomere oder Gemische derselben, Mesitylen, ein oder mehrfach halogenierte Aromaten oder Alkane, offenkettige oder zyklische Ether wie z.B. Tetrahydrofuran (THF) oder Methyl-*tert*-butylether (MTBE), offenkettige oder zyklische Ester, oder polare aprotische Lösungsmittel wie z.B. 1,4-Dioxan, Acetonitril, *N,N*-Dimethylformamid (DMF), *N,N*-Dimethylacetamid, Dimethylsulfoxid (DMSO), zyklische Carbonate, z.B. Ethylencarbonat oder Propylencarbonat, *N*-Methylpyrrolidon (NMP), Sulfolan, Tetramethylharnstoff, *N,N'*-Dimethyletlrylenharnstoff oder Mischungen derselben untereinander, mit Wasser und/oder anderen Lösungsmitteln eingesetzt werden. Auch der Einsatz von flüssigem oder überkritischem Kohlendioxid als Lösungsmittel in Reinsubstanz oder als Gemisch mit einem der oben genannten Lösungsmittel ist möglich. Bevorzugt sind offenkettige oder zyklische Ether wie z.B. Tetrahydrofuran (THF) oder Methyl-*tert*-butylether (MTBE), offenkettige oder zyklische Ester, polare aprotische Lösungsmittel wie z.B. 1,4-Dioxan, Acetonitril, *N,N*-Dimethylformamid (DMF), *N,N*-Dimethylacetamid, Dimethylsulfoxid (DMSO), zyklische Carbonate, z.B. Ethylencarbonat oder Propylencarbonat, *N*-Methylpyrrolidon (NMP), Sulfolan, Tetramethylharnstoff, *N,N'*-Dimethylethylenharnstoff oder Mischungen derselben untereinander und/oder anderen Lösungsmitteln sowie flüssiges oder überkritisches Kohlendioxid. Besonders bevorzugt ist die Reaktion in Abwesenheit von Lösungsmitteln, insbesondere bevorzugt ist die Reaktion in Abwesenheit von Wasser als Lösungsmittel und/oder wässrigen Reagenzien.

Die Reaktion kann im Batch-Verfahren, im Semi-Batch-Verfahren oder im kontinuierlichen Verfahren durchgeführt werden. Im bevorzugten Semi-Batch-Verfahren wird ein Gemisch aus Starter, Katalysator und ggf. einem Lösungsmittel vorgelegt und Formaldehyd bzw. die Formaldehyd-Quelle in Reinsubstanz als Gas oder Flüssigkeit oder in Lösung der Reaktion zudosiert. Die zudosierte Menge an Formaldehyd bzw. in der Formaldehyd-Quelle enthaltenen Formaldehyd-Äquivalenten wird so gewählt, dass das gewünschte Molekulargewicht des Zwischenproduktes erreicht wird.

Die Reaktion wird beispielsweise bei einer Temperatur zwischen 20 und 200 °C, bevorzugt zwischen 20 und 120 °C und besonders bevorzugt zwischen 40 und 120 °C durchgeführt. Bei Verwendung einer Formaldehyd-Quelle, die chemisch gebundenen Formaldehyd enthält, liegt die Reaktionstemperatur oberhalb der unter den gegebenen Bedingungen zur Freisetzung von Formaldehyd benötigten Temperatur. Bei Anwesenheit von geeigneten Katalysatoren, die die Freisetzung von Formaldehyd beschleunigen, kann die Reaktionstemperatur unterhalb der für die nicht-katalysierte Freisetzung von Formaldehyd nötigen Temperatur liegen. Gegebenenfalls können die Katalysatoren für die Herstellung der erfindungsgemäßen Polyoxymethylen-Block-Copolymere ebenfalls als Katalysatoren für die Freisetzung von Formaldehyd fungieren.

Der Druck während der Polymerisation von Formaldehyd in Anwesenheit der Starterverbindung und gegebenenfalls zusätzlichen Comonomers beträgt 1 bis 200 bar. Bei der Verwendung von gasförmigem Formaldehyd beträgt der Druck bevorzugt 5 bis 100 bar, besonders bevorzugt 10 bis 50 bar.

Die Reaktionszeit für die Polymerisation beträgt beispielsweise 0,05 bis 120 Stunden, bevorzugt 0,5 bis 48 Stunden, besonders bevorzugt 1 bis 24 Stunden. Als Reaktionszeit wird die Zeitspanne betrachtet, während der sich Katalysator, Formaldehyd und Starterverbindung bei Reaktionstemperatur in direktem Kontakt befinden. Insbesondere bei der Durchführung im Semi-Batch-Verfahren, wie z.B. beim Einleiten von gasförmigem Formaldehyd in die Reaktionsmischung, richtet sich die Reaktionszeit nach der Menge des zudosierten Formaldehyds bzw. der zudosierten Formaldehyd-Äquivalente.

Das bei der Herstellung der Polyoxymethylen-Block-Copolymere erhaltene Produktgemisch kann ohne weitere Aufreinigungsschritte in der Reaktion mit Isocyanaten zu Polyurethanen eingesetzt werden. Die weitere Umsetzung kann direkt in dem vorliegenden Reaktor (*in situ*) oder in einem zweiten Reaktor ohne vorherige Isolierung der Polyoxymethylen-Block-Copolymere erfolgen. Alternativ kann das Reaktionsgemisch zeitlich versetzt, z.B. nach Umfüllen oder Lagerung, für die weitere Umsetzung verwendet werden. Bevorzugt werden für die weitere Umsetzung Produktgemische eingesetzt, bei denen die Polyoxymethylen-Block-Copolymere in Abwesenheit von Lösungsmitteln erhalten wurden.

Werden im erfindungsgemäßen Verfahren wässrige Lösungen eingesetzt, so ist es bevorzugt, wenn das Lösungswasser in einem der Isocyanat-Reaktion vorgeschalteten Schritt, beispielsweise durch einen Strippschritt, abgetrennt wird. Vorzugsweise wird das erfindungsgemäße Verfahren allerdings in der Abwesenheit von wässrigen Reagenzien durchgeführt, so dass kein zusätzlicher Schritt zur Abtrennung des Lösungswassers erforderlich ist.

Bei der Herstellung der erfindungsgemäßen niedermolekularen Polyoxymethylen-Block-Copolymere in Anwesenheit von Lösungsmitteln kann vor der weiteren Umsetzung eine Entfernung der flüchtigen Komponenten, z.B. durch Vakuumdestillation oder Dünnschichtverdampfung, erfolgen. Zusätzliche Reinigungsschritte wie z.B. Extraktion, Fällung und/oder Filtration, z.B. zum Entfernen des Katalysators, sind ebenfalls eingeschlossen.

Ausführungsformen des erfindungsgemäßen Verfahrens werden nachfolgend beschrieben. Sie können beliebig miteinander kombiniert werden, sofern sich aus dem Kontext nicht eindeutig das Gegenteil ergibt.

Das erhaltene Zwischenprodukt (Polyoxymethylen-Block-Copolymer) weist ein zahlenmittleres Molekulargewicht $M_n$ von < 4500 g/mol, bevorzugt ≤ 3500 g/mol, und besonders bevorzugt ≤ 3000 g/mol auf. Das Molekulargewicht kann mittels Gelpermeationschromatographie gegen Polypropylenglykol-Standards oder über die OH-Zahl bestimmt werden. Vorzugsweise beträgt das zahlenmittlere Molekulargewicht $M_n$ des Zwischenprodukts ≥ 92 g/mol bis < 4500 g/mol, besonders bevorzugt ≥ 500 g/mol bis < 4500 g/mol, mehr bevorzugt ≥ 600 g/mol bis ≤ 3500 g/mol und ganz besonders bevorzugt ≥ 600 g/mol bis ≤ 3000 g/mol.

Die Einstellung des Molekulargewichts auf einen Wert < 4 500 g/mol erfolgt zweckmäßigerweise über die Stöchiometrie der Einsatzstoffe. So wird die Summe der molaren Mengen $n_i$ aller in das erfindungsgemäße Polyoxymethylen-Block-Copolymer eingeführten Monomere i, also der Summe der molaren Menge $n_{FA}$ von Formaldehyd bzw. von den in der Formaldehyd-Quelle enthaltenen Formaldehyd-Äquivalenten und der molaren Mengen der zusätzlichen Co-Monomere so gewählt, dass

$$M_{Starter} + \frac{\sum_i n_i \times M_i}{n_{Starter}} < 4500 \text{ g/mol} \quad \text{(Gleichung I)}$$

beträgt, wobei $n_{Starter}$ der molaren Menge und $M_{Starter}$ dem zahlenmittleren Molekulargewicht der Starterverbindung entspricht, sowie $M_i$ dem Molekulargewicht des jeweiligen Monomers i.

In einer weiteren Ausführungsform des erfindungsgemäßen Verfahrens ist der Katalysator ausgewählt aus der Gruppe der basischen Katalysatoren und/oder der Lewis-sauren Katalysatoren. Als Katalysator werden Verbindungen eingesetzt, die die Polymerisation von Formaldehyd katalysieren. Hierbei kann es sich um basische Katalysatoren handeln oder um Lewis-saure Katalysatoren, die als Lewis-saures Zentrum z.B. ein Metall der dritten, vierten oder fünften Hauptgruppe, insbesondere Bor, Aluminium, Zinn oder Bismut, ein Metall der dritten oder vierten Nebengruppe oder der Reihe der Lanthanoide, Vanadium, Molybdän, Wolfram oder ein Metall der achten bis zehnten Nebengruppe enthalten. Bevorzugt sind Lewis-saure Katalysatoren.

Beispiele für basische Katalysatoren sind tertiäre oder aromatische basische Amine wie z.B. Triethylamin sowie andere Trialkylamine, Pyridin sowie ein- oder mehrfach substituierte PyridinDerivate, *N*-Alkyl- oder *N*-Aryl-imidazol, 1,4-Diazabicyclo[2.2.2]octan (DABCO), 4-(Dimethylamino)-pyridin (DMAP), 1,8-Diazabicyclo[5.4.0]undec-7-en (DBU), Triazabicyclo[4.4.0]dec-5-ene (TBD), 7-Methyl-1,5,7-triazabicyclo[4.4.0]dec-5-ene (MTBD). Weitere Beispiele für basische Katalysatoren sind anorganische basische Verbindungen wie beispielsweise Alkalihydroxide, insbesondere Kaliumhydroxid und Cäsiumhydroxid. Der Zusatz von weiteren Additiven zur Erhöhung der Löslichkeit und/oder der Reaktivität, wie beispielsweise Kronenether oder Tetraalkylammonium-, Tetraalkyl- oder Tetraarylphosphonium-Salzen ist nicht ausgeschlossen.

Lewis-saure Katalysatoren enthalten als Lewis-saures Zentrum ein oder mehrere koordinativ ungesättigte Metallatome, wie z.B. Metalle der dritten, vierten oder fünften Hauptgruppe, insbesondere Bor, Aluminium, Zinn oder Bismut, Metalle der dritten und vierten Nebengruppe sowie Metalle der Reihe der Lanthanoide, Vanadium, Molybdän, Wolfram, Metalle der achten bis zehnten Nebengruppe, insbesondere Eisen, Kobalt, Nickel, Rhodium, Iridium, Palladium, Platin, Kupfer oder Zink. Das koordinativ ungesättigte Lewis-saure Zentrum zeichnet sich dadurch aus, dass nukleophile Moleküle daran binden können. Das koordinativ ungesättigte Lewis-saure Zentrum kann bereits in der als Katalysator eingesetzten Verbindung vorhanden sein oder bildet sich in der Reaktionsmischung, z.B. durch Abspaltung eines schwach gebundenen nukleophilen Moleküls. Besonders bevorzugt sind Lewis-saure Katalysatoren, die als Lewis-saures Zentrum ein oder mehrere Zinn-, Bismuth-, Vanadium- oder Molybdänatome enthalten, wie z.B. Dibutylzinndilaurat (DBTL), Dibutylzinnoxid, Bismuttris(2-ethylhexanoat), Lithiumorthovanadat oder Lithiummolybdat.

Der Katalysator wird üblicherweise im molaren Verhältnis 1:10 000 bis 10:1, bevorzugt 1:1 000 bis 1:1, besonders bevorzugt 1:1000 bis 1:10 zu den in der Starterverbindung enthaltenen funktionellen Gruppen eingesetzt.

In einer weiteren Ausführungsform des erfindungsgemäßen Verfahrens wird die Umsetzung des Zwischenprodukts mit dem Isocyanat in Gegenwart eines Katalysators durchgeführt, welcher der gleiche Katalysator wie in der vorangegangenen Polymerisation von Formaldehyd ist.

Eine solche Ausführungsform hat auch den Vorteil, dass der Katalysator, welcher zur Polymerisation von Formaldehyd eingesetzt wird, vor der Umsetzung mit dem Isocyanat nicht abgetrennt werden muss, so dass das erfindungsgemäße Verfahren auch als "Eintopf"-Verfahren durchgeführt werden kann.

In einer weiteren Ausführungsform des erfindungsgemäßen Verfahrens weist das Startermolekül ein zahlenmittleres Molekulargewicht $M_n$ von ≥ 62 g/mol bis ≤ 4470 g/mol, bevorzugt von ≥ 90 g/mol bis 3470 g/mol, besonders bevorzugt von ≥ 100 g/mol bis ≤ 3000 g/mol und ganz besonders bevorzugt von ≥ 350 g/mol bis ≤ 3000 g/mol auf.

In einer weiteren Ausführungsform ist das Startermolekül eine oligomere Starterverbindung mit mindestens zwei Zerewitinoff-aktiven Wasserstoffatomen und einem zahlenmittleren Molekulargewicht $M_n$ von ≥ 100 g/mol bis ≤ 4470 g/mol, bevorzugt von $\geq$ 210 g/mol bis 3470 g/mol und besonders bevorzugt von $\geq$ 350 g/mol bis $\leq$ 3000 g/mol. Das zahlenmittlere Molekulargewicht $M_n$ des Startermoleküls kann in gleicher Weise wie das zahlenmittlere Molekulargewicht $M_n$ des erfindungsgemäßen Zwischenproduktes mittels Gel-Permeations-Chromatographie oder über die OH-Zahl bestimmt werden.

In einer weiteren Ausführungsform des erfindungsgemäßen Verfahrens ist das Startermolekül ausgewählt aus der Gruppe der Polyetherpolyole, Polyesterpolyole, Polyetheresterpolyole, Polycarbonatpolyole und/oder Polyacrylatpolyole. Die Polyole können beispielsweise ein zahlenmittleres Molekulargewicht $M_n$ von $\geq$ 62 g/mol bis $\leq$ 8000 g/mol, bevorzugt von $\geq$ 90 g/mol bis $\leq$ 5000 g/mol und besonders bevorzugt von $\geq$ 92 g/mol bis $\leq$ 2000 g/mol aufweisen.

Die durchschnittliche OH-Funktionalität der Polyole ist $\geq$ 2, beispielsweise in einem Bereich von $\geq$ 2 bis $\leq$ 6, vorzugsweise von $\geq$ 2,0 bis $\leq$ 4 und besonders bevorzugt von $\geq$ 2,0 bis $\leq$ 3.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxid und/oder Epichlorhydrin an di- oder polyfunktionelle Startermoleküle.

Geeignete Startermoleküle für die Polyetherpolyole sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Geeignete Polyesterpolyole sind unter Anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Sofern die mittlere Funktionalität des zu veresternden Polyols > 2 ist, können zusätzlich auch Monocarbonsäuren wie beispielsweise Benzoesäure und Hexancarbonsäwe mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen erhältlich.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit $\geq$ 4 bis $\leq$ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit $\geq$ 1 bis $\leq$ 4 Kohlenstoffatomen eingesetzt werden.

Als weitere Komponente zur Herstellung der Polyetheresterpolyole werden Polyetherpolyole eingesetzt, die man durch Alkoxylieren von Startermolekülen wie beispielsweise mehrwertigen Alkoholen erhält. Die Startermoleküle sind mindestens difunktionell, können aber gegebenenfalls auch Anteile höherfunktioneller insbesondere trifunktioneller Startermoleküle enthalten.

Startermoleküle für diese Polyetherpolyole sind zum Beispiel Diole mit zahlenmittleren Molekulargewichten $M_n$

von vorzugsweise ≥ 18 g/mol bis ≤ 400 g/mol oder von ≥ 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6-Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Neben den Diolen können auch Polyole mit zahlenmittleren Funktionalitäten von > 2 bis ≤ 8, oder von ≥ 3 bis ≤ 4 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von vorzugsweise ≥ 62 g/mol bis ≤ 400 g/mol oder von ≥ 92 g/mol bis ≤ 200 g/mol.

Polyetheresterpolyole können auch durch die Alkoxylierung von Reaktionsprodukten, die durch die Umsetzung von organischen Dicarbonsäuren und Diolen erhalten werden, hergestellt werden. Als Derivate dieser Säuren können beispielsweise deren Anhydride eingesetzt werden, wie zum Beispiel Phthalsäureanhydrid.

Polyacrylatpolyole können durch radikalische Polymerisation von Hydroxylgruppen aufweisenden, olefinisch ungesättigten Monomeren oder durch radikalische Copolymersation von Hydroxylgruppen aufweisenden, olefinisch ungesättigten Monomeren mit gegebenenfalls anderen olefinisch ungesättigten Monomeren erhalten werden. Beispiele hierfür sind Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropylmethacrylat-Isomerengemisch. Endständige Hydroxylgruppen können auch in geschützter Form vorliegen. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-Butylperoxid.In einer weiteren Ausführungsform des erfindungsgemäßen Verfahrens ist das Isocyanat ein aliphatisches oder aromatisches Di- oder Polyisocyanat. Beispiele sind 1,4-Butylendiisocyanat, 1,5-Pentandiisocyanat, 1,6-Hexamethylendiisocyanat (HDI) bzw. deren Dimere, Trimere, Pentamere, Heptamere oder Nonamere oder Gemische derselben, Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit $C_1$ bis $C_6$-Alkylgruppen. Bevorzugt ist hierbei ein Isocyanat aus der Diphenylmethandiisocyanatreihe.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass das Isocyanat ein Prepolymer ist, welches erhältlich ist durch Reaktion eines Isocyanats mit einer NCO-Funktionalität von ≥ 2 und Polyolen mit einem Molekulargewicht von ≥ 62 g/mol bis ≤ 8000 g/mol und OH-Funktionalitäten von ≥ 1,5 bis ≤ 6.

In einer weiteren Ausführungsform des erfindungsgemäßen Verfahrens wird das Formaldehyd als gasförmiges Formaldehyd in das Reaktionsgefäß eingetragen. Überraschend wurde gefunden, dass bei der Verwendung von gasförmigem Formaldehyd NCO-modifizierte Polyoxymethylen-Block-Copolymere mit einem besonders geringen Gehalt an Nebenprodukten erhalten werden.Im erfindungsgemäßen Verfahren werden die Polyoxymethylen-Einheiten entweder direkt oder indirekt über ein oder mehrere weitere Co-Monomere oder Spacer mit den zusätzlichen Oligomeren verknüpft. Das Zwischenprodukt enthält vorzugsweise als äußere (= terminale) Blöcke Polyoxymethylen-Blöcke , so dass bei der anschließenden Umsetzung des Zwischenprodukts mit der Isocyanat-Komponente die Polyoxymethylen-Einheiten mit der Isocyanat-Komponente verknüpft werden. Auch eine Verknüpfung mehrerer Polyoxymethylen-Einheiten untereinander über ein oder mehrere weitere Co-Monomere ist möglich. Daher erfolgt in einer weiteren Ausführungsform des erfindungsgemäßen Verfahrens die Polymerisation weiterhin in Gegenwart eines weiteren Co-Monomers. Als weitere Co-Monomere können beispielsweise zyklische Ether, insbesondere Epoxide wie z.B. Ethylenoxid, Propylenoxid oder Styroloxid, Oxetan, THF, Dioxan, zyklische Acetale wie z.B. 1,3-Dioxolan oder 1,3-Dioxepan, zyklische Ester wie z.B. γ-Butyrolacton, γ-Valerolacton, ε-Caprolacton, oder zyklische Säureanhydride wie z.B. Maleinsäureanhydrid, Glutarsäureanhydrid oder Phthalsäureanhydrid zum Einsatz kommen. Bevorzugte weitere Co-Monomere sind Epoxide, zyklische Acetale und zyklische Ester, besonders bevorzugte weitere Co-Monomere sind Ethylenoxid, Propylenoxid, 1,3-Dioxolan, 1,3-Dioxepan und ε-Caprolacton.

Die Dosierung weiterer Co-Monomere kann in Reinsubstanz oder in Lösung erfolgen. In einer alternativen Ausführungsform erfolgt die Dosierung weiterer Co-Monomere im Gemisch mit Formaldehyd bzw. der Formaldehyd-Quelle. Die Dosierung weiterer Co-Monomere kann vor der Dosierung, parallel zu der Dosierung oder im Anschluss an die Dosierung von Formaldehyd bzw. der Formaldehyd-Quelle erfolgen.

Ein weiterer Gegenstand der vorliegenden Erfindung sind NCO-modifizierte Polyoxymethylen-Block-Copolymere, erhältlich durch ein erfindungsgemäßes Verfahren.

In einer Ausführungsform weisen die NCO-modifizierten Polyoxymethylen-Block-Copolymere ein zahlenmittleres Molekulargewicht von $\leq$ 15000 g/mol, bevorzugt $\leq$ 8000 g/mol, besonders bevorzugt $\leq$ 5000 g/mol auf. Das zahlenmittlere Molekulargewicht lässt sich beispielsweise per GPC gegen Polypropylenglykol-Standards bestimmen.

In einer weiteren Ausführungsform weisen die NCO-modifizierten Polyoxymethylen-Block-Copolymere eine Viskosität bei 20 °C von $\leq$ 100 000 mPa·s, bevorzugt $\leq$ 50 000 mPa·s, besonders bevorzugt $\leq$ 15 000 mPa·s auf.

Die nach dem erfindungsgemäßen Verfahren erhältlichen NCO-modifizierten Polyoxymethylen-Block-Copolymere weisen einen geringen Gehalt an Nebenprodukten auf und können problemlos verarbeitet werden, insbesondere durch Umsetzung mit Kettenverlängerern zu Polyurethanen. Für Polyurethananwendungen werden vorzugsweise NCO-modifizierte Polyoxymethylen-Block-Copolymere mit einer Funktionalität von mindestens 2 eingesetzt. Des Weiteren können die nach dem erfindungsgemäßen Verfahren erhältlichen NCO-modifizierten Polyoxymethylen-Block-Copolymere in Anwendungen wie Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen verwendet werden.

Die Erfindung betrifft daher ebenfalls die Verwendung von erfindungsgemäßen NCO-modifizierten Polyoxymethylen-Block-Copolymeren zur Herstellung von Polyurethan-Polymeren.

In einer Ausführungsform der Verwendung sind die Polyurethan-Polymere Polyurethan-Weichschaumstoffe.

In einer weiteren Ausführungsform der Verwendung sind die Polyurethan-Polymere thermoplastische Polyurethan-Polymere.

## **Beispiele**

Die Erfindung wird anhand der nachfolgenden Figuren und Beispiele näher erläutert, ohne jedoch darauf beschränkt zu sein. Es zeigen:

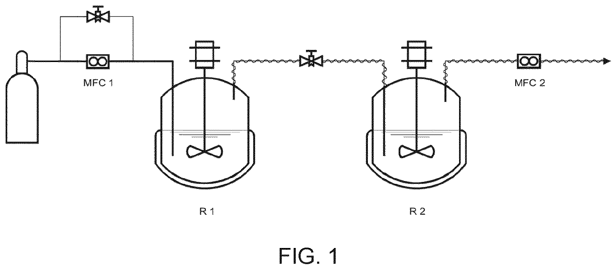

FIG. 1 eine Reaktoranordnung zur Durchführung des erfindungsgemäßen Verfahrens

Eingesetzte H-funktionelle oligomere Verbindungen:

PET-1 difunktionelles Poly(oxypropylen)polyol mit einer OH-Zahl von 109,6 $mg_{KOH}$/g, woraus sich das mittlere Molekulargewicht M.W. = 1022 g/mol und die durchschnittliche Summenformel $HO(CH(CH_3)CH_2)_{17,02}H$ ergibt. Per GPC gegen Polypropylenglykol-Standards wurde ein zahlen-mittleres Molekulargewicht $M_n$ = 1011 g/mol und ein Polydispersitätsindex PDI = 1,07 gemessen.

PET-2 trifunktionelles Poly(oxypropylen)polyol (CAS-Nr. [25791-96-2]) mit einer OH-Zahl von 225,5 $mg_{KOH}$/g, woraus sich das mittlere Molekulargewicht M.W. = 745 g/mol und die durchschnittliche Summenformel $(C_3H_5O_3)((CH(CH_3)CH_2O)_{11,26}H_3$ ergibt. Per GPC gegen Polypropylenglykol-Standards wurde ein zahlen-mittleres Molekulargewicht $M_n$ = 639 g/mol und ein Polydispersitätsindex PDI = 1,06 gemessen.

Als Formaldehyd-Quelle wurde Paraformaldehyd (CAS [30525-89-4]) der Firma Aldrich (Katalognummer 16005, Lot# SZBB0250V) eingesetzt.

Beschreibung der Methoden:

Die Molmassenverteilungen wurden mittels Gel-Permeations-Chromatographie (GPC) ermittelt.

Gel-Permeations-Chromatographie (GPC): Die Messungen erfolgten auf dem Gerät Agilent 1200 Series (G1310A Iso Pump, G1329A ALS, G1316A TCC, G1362A RID, G1365D MWD) der Firma Agilent, Detektion über RID; Elutionsmittel: Chloroform (GPC grade), Flussrate 1.0 ml/min; Säulenkombination: PSS SDV Vorsäule 8×50 mm (5 $\mu$m), 2× PSS SDV linear S 8×300 ml (5 $\mu$m). Polypropylenglykolproben bekannter Molmasse der Firma "PSS Polymer Standards Service" wurden zur Kalibrierung verwendet. Als Messaufnahme- und Auswertungssoftware wurde das Programmpaket "PSS WinGPC Unity" verwendet. Die Aufnahme der GPC Chromatogramme erfolgte gemäß DIN 55672-1, wobei anstatt THF als Eluent Chloroform eingesetzt wurde.

$^{1}$H-NMR-Spektroskopie: Die Messungen erfolgten auf dem Gerät Bruker AV400 (400 MHz) der Firma Bruker; die Kalibrierung der chemischen Verschiebungen erfolgte relativ zum Lösungsmittelsignal (CDCl$_3$, $\delta$ = 7,26 ppm); s = Singulett, m = Multiplett, bs = verbreitertes Singulett, kb = komplexer Bereich. Der Umsatz der terminalen Hydroxygruppen mit 4-Toluylisocyanat wurde über den Vergleich der Integrale für die Methylgruppen für Tol-CH$_3$ (2,09-2,25 ppm) und PET-1-CH$_3$ bzw. PET-2-CH$_3$ (1,13-1,26 ppm) bestimmt.

$^{13}$C-NMR-Spektroskopie: Die Messungen erfolgten auf dem Gerät Bruker AV400 (100 MHz) der Firma Bruker; die Kalibrierung der chemischen Verschiebungen erfolgte relativ zum Lösungsmittelsignal (CDCl$_3$, $\delta$ = 77,16 ppm); APT (attached proton test): CH$_2$, C$_{quart}$: positives Signal (+); CH, CH$_3$: negatives Signal (-); HMBC: Hetero multiple bond correlation; HSQC: Heteronuclear single-quantum correlation.

Infrarot (IR)-Spektroskopie: Die Messungen erfolgten auf dem Gerät Bruker Alpha-P FT-IR-Spektrometer der Firma Bruker; die Messungen erfolgten in Reinsubstanz; Signalintensitäten: vs = very strong (90-100% Absorbance), s = strong (70-90% Absorbance), m = medium (30-70% Absorbance), w = weak (10-30% Absorbance), vw = very weak (0-10% Absorbance, jeweils relativ zum intensivsten Signal); b = verbreiterte Bande.

Electrospray-Massenspektrometrie (ESI-MS): Die Messungen erfolgten auf dem Gerät LTQ Orbitrap XL der Firma Thermo Fisher Scientific; Proben wurden mit MeOH verdünnt.

Die OH-Zahl (Hydroxylzahl) wurde in Anlehnung an DIN 53240-2 bestimmt, wobei jedoch N-Methylpyrrolidon anstelle von THF/Dichlormethan als Lösemittel verwendet wurde. Es wurde mit 0,5 molarer ethanolischer KOH Lösung titriert (Endpunktserkennung mittels Potentiometrie). Als Prüfsubstanz diente Rizinusöl mit durch Zertifikat festgelegter OH-Zahl. Die Angabe der Einheit in "mg$_{KOH}$/g" bezieht sich auf mg[KOH]/g[Polyol]. Die OH-Zahl steht gemäß nachfolgender Gleichung in Beziehung zur Äquivalentmolmasse.

$$\text{OH-Zahl } [\text{mg}_{KOH}/\text{g}] = 56100 \ [\text{mg}_{KOH}/\text{mol}] \ / \ \text{Äquivalentmolmasse } [\text{g/mol}]$$

Unter Äquivalentmolmasse ist die durch die Zahl der aktiven Wasserstoffatome (Funktionalität) geteilte zahlenmittlere Gesamtmolmasse des aktive Wasserstoffatome enthaltenden Materials zu verstehen.

Die Bestimmung der Viskosität erfolgte auf einem Physica MCR 501 Rheometer der Fa. Anton Paar. Es wurde eine Kegel-Platte-Konfiguration mit einem Abstand von 50 $\mu$m gewählt (Messsystem DCP25). 0,1 g der Substanz wurde auf die Rheometerplatte aufgebracht und bei 25 °C einer Scherung von 0,01 bis 1000 1/s unterworfen und für 10 min alle 10 s die Viskosität gemessen. Angegeben ist die über alle Messpunkte gemittelte Viskosität.

Für die Reaktionen wurde eine Versuchsapparatur verwendet, die aus zwei 200 ml Edelstahlautoklaven bestand, welche über eine beheizbare und mit einem Ventil absperrbare 1/8-Zoll-Gaskapillare ("Brücke") verbunden waren. Beide Reaktoren waren mit Hohlwellenrührer und Manometer ausgestattet und unabhängig voneinander beheizbar. Die Gaszufuhr zu Reaktor 1 ("Depolymerisationsreaktor" R1) erfolgte über ein mit einem Massenflußregler (MFC 1, Kapazität: 100 ml/min) verbundenes Tauchrohr. Der Gasstrom wurde durch die Brücke von Reaktor 1 in den Reaktor 2 geleitet. An Reaktor 2 ("Polymerisationsreaktor" R2) war ein Gasauslass, wobei der Abgasstrom mit Hilfe eines zweiten Massenflussreglers (MFC 2, Kapazität: 100 ml/min) gesteuert wurde. Über MFC 1 wurde ein Trägergasstrom (Argon oder Kohlendioxid) mit dem Volumenstrom $\dot{V}_{in}$ durch den Reaktor 1 geleitet, in dem die Depolymerisation von Paraformaldehyd zu gasförmigem Formaldehyd durchgeführt wurde. Der mit Formaldehydgas angereicherte Trägergasstrom wurde dann durch die beheizte Brücke in Reaktor 2 geleitet, in dem die Polymerisation durchgeführt wurde. Durch Regeln von MFC 2 auf einen Volumenstrom $\dot{V}_{aus}$ = $\dot{V}_{in}$ wurde Druckkonstanz im Gesamtsystem gewährleistet.

Die in den Beispielen eingesetzten Druckreaktoren hatte eine Höhe (innen) von 6,84 cm und einen Innendurchmesser von 5,98 cm. Die Reaktoren waren ausgestattet mit einem elektrischen Heizmantel (240 Watt maximale Heizleistung). Weiterhin waren die Reaktoren mit einem Einleitrohr sowie je einem Thermofühler mit 1,6 mm Durchmesser ausgestattet, der bis 3 mm über den Boden in den Reaktor ragte.

Bei dem in den Beispielen eingesetzten Hohlwellenrührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf und hatte einen Durchmesser von 25 mm und eine Höhe von 7 mm. An jedem Ende des Arms war ein Gasauslass angebracht, der einen Durchmesser von 3 mm aufwies. Durch die Drehung des Rührers entstand ein Unterdruck derart, dass das über der Reaktionsmischung befindliche Gas (CO$_2$ und ggf. Formaldehyd) abgesaugt wurde und über die Hohlwelle des Rührers in die Reaktionsmischung eingeleitet wurde.

Beispiel 1: Herstellung eines bifunktionellen Polypropylenoxid-Polyoxymethylen-Block-Copolymeres und *in situ*-Modifikation mit 4-Tolylisocyanat

In Reaktor 1 wurde eine Suspension von 30,34 g (1,01 mol) Paraformaldehyd, 0,67 g (2,05 mmol) 4-Dodecylbenzolsulfonsäure und 8,15 g wasserfreies Molekularsieb 3Å in 30 ml Undecan vorgelegt. Reaktor 2 enthielt eine Lösung von 70,0 mg (0,111 mmol) Dibutylzinndilaurat (DBTL) in 20,02 g (20,02 mmol) PET-1. Über eine Bypass-Leitung an MFC 1 wurde das gesamte System bei geöffneter Brücke mit 20 bar $CO_2$ beaufschlagt. Dann wurde die Brücke geschlossen und der Druck in Reaktor 1 über ein Gasauslassventil auf 5 bar reduziert. Das Reaktionsgemisch in Reaktor 1 wurde unter Rühren bei abgesperrter Brücke auf 125 °C geheizt, das Reaktionsgemisch in Reaktor 2 unter Rühren auf 60 °C. Die Temperatur der Brücke wurde auf 170 °C eingestellt. Nach Erreichen der Reaktionstemperatur wurde der Druck in Reaktor 2 auf einen Wert zwischen 17 und 19 bar eingestellt. Der Druck in Reaktor 1 wurde über den Bypass mit $CO_2$ auf 20 bar eingestellt. Die Bypass-Leitung wurde geschlossen und an den Massenflussreglern ein konstanter Argon-Strom $\dot{V}_{aus} = \dot{V}_{in} = 47.6$ ml/min eingestellt. Direkt im Anschluss wurde die Brücke geöffnet. Nach 4.7 h wurde die Brücke geschlossen, das System auf Raumtemperatur abgekühlt und der Druck separat in Reaktor 1 und Reaktor 2 abgelassen. Anschließend wurden in Reaktor 2 unter Rühren bei einer Innentemperatur von 40 °C 5,05 ml (5,33 g, 40,0 mmol) 4-Tolylisocyanat mit einer Flussrate von 1 ml/min eingeführt. Nach beendeter Zugabe wurde das Reaktionsgemisch in Reaktor 2 bei 60 °C 16 h nachgerührt. Wiegen des Reaktors 2 vor der Entnahme des Produktes ergab für die Reaktion eine Gewichtszunahme von 2,40 g (Massendifferenz abzüglich der Masse des zugeführten Isocyanates), was einem Übertrag von 2,40 g (79.9 mmol) gasförmigen Formaldehyd entspricht. Aus Reaktor 2 wurden 25,11 g eines viskosen, farblosen Öls entnommen.

Viskosität: 1,744 Pa·s

Durch den Übertrag von 2,40 g (79,9 mmol) Formaldehyd wurde das als Oligomer eingesetzte PET-1 um durchschnittlich 3,95 Formaldehyd-Einheiten pro Molekül, bzw. 1,98 Formaldehyd-Einheiten pro Kettenende verlängert.

Per Gel-Permeations-Chromatographie (GPC) gegen Polypropylenglycol-Standards wurde ein zahlenmittleres Molekulargewicht $M_n$ = 1172 g/mol und ein Polydispersitätsindex PDI = 1,05 ermittelt.

$^1$H-NMR-Spektroskopie (400 MHz, $CDCl_3$): δ = 0,74-0,84 (m, 0,54 H), 0,88 (bs, 0,16 H), 0,91-1,13 (m, 25,64 H, PET-1-$CH_3$), 1,13-1,26 (m, 2,71 H, PET-1-$CH_3$), 2,09-2,25 (m, 3,00 H, Tol-$CH_3$), 3,14-3,90 (m, 26,69 H, PET-1-CH/PET-1-$CH_2$), 4,61-5,04 (kb, 1,73 H, $OCH_2O$/PET-1-C$\underline{H}$($CH_3$)$OCH_2O$/PET-1-C$\underline{H_2}OCH_2O$), 5,23-5,38 (m, 0,98 H, $OCH_2O$), 6,92-7,02 (m, 1,79 H, Tol-$CH_{ar}$), 7,14-7,32 (m, 1,75 H, Tol-$CH_{ar}$) ppm.

$^{13}$C-APT-NMR-Spektroskopie (100 MHz, $CDCl_3$): δ = 14,0 (-), 16,8 (-), 17,0 (-), 17,2 (-), 17,3 (-), 17,5 (-), 17,6 (-), 17,9 (-), 18,1 (-), 18,4 (-), 20,4 (-, Tol-$CH_3$), 20,6 (-, Tol-$CH_3$), 22,5 (+), 29,2 (+), 29,5 (+), 29,5 (+), 31,8 (+), 65,4 (-), 67,0 (-), 67,1 (-), 69,3 (+), 69,7 (+), 71,6 (+), 72,7 (+), 73,2 (+), 73,7 (+), 74,3 (+), 74,4 (+), 74,5 (-), 74,8 (-), 74,9 (-), 75,0 (-), 75,2 (-), 75,3 (-), 75,4 (+), 75,7 (+), 75,8 (+), 75,8 (+), 76,5 (-), 82,6 (+, O-$CH_2$-O), 82,7 (+, O-$CH_2$-O), 85,2 (+, O-$CH_2$-O), 85,8 (+, O-$CH_2$-O), 88,3 (+, O-$CH_2$-O), 88,5 (+, O-$CH_2$-O), 88,9 (+, O-$CH_2$-O), 89,8 (+, O-$CH_2$-O), 90,2 (+, O-$CH_2$-O), 90,4 (+, O-$CH_2$-O), 90,7 (+, O-$CH_2$-O), 92,0 (+, O-$CH_2$-O), 92,1 (+, O-$CH_2$-O), 93,8 (+, O-$CH_2$-O), 94,9 (+, O-$CH_2$-O), 117,8 (-, Tol-$CH_{ar}$), 118,8 (-, Tol-$CH_{ar}$), 120,8 (-, Tol-$CH_{ar}$), 129,2 (-, Tol-$CH_{ar}$), 129,4 (-, Tol-$CH_{ar}$), 129,5 (-, Tol-$CH_{ar}$), 130,1 (+), 130,7 (+), 131,5 (+), 132,3 (+), 135,2 (+, Tol-C-NH-), 135,4 (+, Tol-C-NH-), 135,6 (+, Tol-C-NH-), 136,7 (+, Tol-$\underline{C}CH_3$), 145,8 (+,Tol-NH-C(O)-O), 146,2 (+,Tol-NH-C(O)-O), 152,5 - 153,4 (+, Tol-NH-C(O)-O) ppm.

Das Auftreten einer Vielzahl an Signalen im $^1$H-NMR-Spektrum im Bereich 4,6 bis 5,4 ppm, sowie einer Vielzahl an Signalen mit positiver Polarität im $^{13}$C-APT-NMR-Spektrum im Bereich 82,6 bis 94,9 ppm zeigt das Vorliegen chemisch nicht-äquivalenter Oxymethylen-Gruppen in Blöcken $(CH_2O)_n$ mit unterschiedlicher Kettenlängen.

Weiterhin zeigt das Vorliegen der entsprechenden dem Carbamat zugeordneten Signale im $^1$H- und $^{13}$C-APT-NMR-Spektrum, dass die Umsetzung der Polyoxymethylen-Block-Copolymere mit 4-Tolylisocyanat erfolgreich war. Aus dem Vergleich der Integrale für die Methylgruppen Tol-$CH_3$ und PET-1-$CH_3$ ergibt sich ein Verhältnis von 0,106 Tol-$CH_3$ zu 1 PET-1-$CH_3$. Bei einer durchschnittlichen Kettenlänge von 17,02 ($CH(CH_3)CH_2O$)-Einheiten pro Molekül ergibt dies durchschnittlich 1,804 4-Tolylcarbamat-Einheiten pro Molekül. Die Reaktion des Polyoxymethylen-Block-Copolymers mit 4-Tolylisocyanat verlief demnach mit einem Umsatz von 90%.

Das HMBC-NMR-Spektrum zeigte eine Fernkopplung eines PET-1-$^{13}$C-Signals bei 72,7 ppm zu $^1$H-Signalen bei 4,83 ppm bzw. 4,88 ppm, welche laut HSQC-NMR-Spektroskopie direkte Kopplung zu $^{13}$C-Signalen bei 88,9 bzw. 90,4 ppm zeigten. Beide Signale besitzen im $^{13}$C-APT-NMR eine positive Polarität und können Oxymethylen-Gruppen zugeordnet werden. Damit wurde gezeigt, dass der Polypropylenoxid-Block kovalent mit dem Polyoxymethylen-Block verbunden ist.

Weiterhin wurde im HMBC-NMR-Spektrum eine Fernkopplung des Carbamat-$^{13}$C-Signals bei ca. 153 ppm zu $^1$H-Signalen bei ca. 5,34 ppm beobachtet; letztere Struktureinheit koppelte laut HSQC-NMR-Spektroskopie direkt mit $^{13}$C-Signalen bei 85,8 und 88,9 ppm. Beide Signale besitzen im $^{13}$C-APT-NMR eine positive Polarität und können Oxymethylen-Gruppen zugeordnet werden. Analog wurde für das Carbamat-$^{13}$C-Signal bei 146,2 ppm eine Fernkopplung zu $CH_2$-Gruppen bei 5,05 ($^1$H) und 82,7 ($^{13}$C) ppm sowie 4,83 ($^1$H) und 88,9 ($^{13}$C) ppm beobachtet. Damit wurde gezeigt, dass die Toluylcarbamat-Gruppen kovalent an Oxymethylen-Gruppen gebunden sind.

Diese Fernkopplungen von einerseits PET-1-Endgruppen und andererseits chemisch nicht-äquivalenten Carbamat-Gruppen zu chemisch nicht-äquivalenten Oxymethylen-Einheiten beweisen eindeutig, dass Polyoxymethylen-Blöcke $(CH_2O)_n$ mit unterschiedlicher Kettenlänge n vorliegen, die kovalent sowohl mit PET-1 als auch mit Carbamat-Einheiten verbunden sind, welche aus der Reaktion mit 4-Tolylisocyanat stammen. Die Struktur der erfindungsgemäßen Polyoxymethylen-Block-Copolymere ist somit zweifelsfrei bewiesen.

ESI-MS (FTMS - p): Im ESI-Massenspektrum wurden nachfolgend genannte Signalreihen identifiziert, die der folgenden allgemeinen Summenformel zugeordnet werden können:

$$[H_3CC_6H_4NHC(O)O-(CH_2O)_x-(C_3H_6O)_m-(CH_2O)_y-C(O)NHC_6H_4CH_3 - H]^+$$

Reihe 1 (x + y = 1): m/z (%) [Kettenlänge m] = 835,51583 (1,33) [9], 893,55778 (1,92) [10], 951,59968 (2,60) [11], 1009,64154 (3,03) [12], 1067,68336 (2,87) [13], 1125,72543 (2,39) [14], 1183,76712 (1,65) [15], 1241,80915 (1,05) [16].

Reihe 2 (x + y = 2): *m/z* (%) [Kettenlänge m] = 749,47901 (3,84) [7], 807,52059 (6,67) [8], 865,56235 (8,82) [9], 923,60424 (10,15) [10], 981,64607 (10,06) [11], 1039,68768 (8,74) [12], 1097,72982 (6,52) [13], 1155,77181 (4,29) [14], 1213,81365 (2,66) [15], 1271,85565 (1,51) [16].

Das ESI-Massenspektrum zeigt eindeutig, dass erfindungsgemäße Block-Copolymere aus Polypropylenoxid-Einheiten $(C_3H_6O)_m$ und Polyoxymethylen-Einheiten $(CH_2O)_x$ bzw. $(CH_2O)_y$ mit x + y ≥ 1 erhalten wurden.

Weiterhin zeigt das ESI-Massenspektrum, dass Ketten mit zwei 4-Tolylcarbamat-Einheiten erhalten wurden und somit die Reaktion mit 4-Tolylisocyanat erfolgreich war.

IR-Spektroskopie: v = 3305 (b, vw, v[NH]), 2970 (w), 2929 (w), 2899 (w), 2868 (w), 1731 (w, v[C=O]), 1600 (w), 1536 (b, w), 1453 (b, w), 1406 (w), 1373 (w), 1343 (w), 1315 (w), 1297 (w), 1223 (m), 1209 (w), 1093 (vs), 1004 (m), 933 (m), 853 (w), 818 (m), 768 (vw), 660 (vw), 510 (w) cm$^{-1}$.

Das IR-Spektrum ist weder identisch mit dem IR-Spektrum von Paraformaldehyd, noch mit dem IR-Spektrum von PPG-1000. Das Auftreten einer zusätzlichen Bande bei 968 cm$^{-1}$ weist auf das Vorliegen von Oxymethylen-Gruppen und somit auf den Einbau von Formaldehyd hin. Die NH-und C=O-Streckschwingungen können Carbamat-Einheiten zugeordnet werden. Das Auftreten dieser Banden beweist, dass die Umsetzung der terminalen OH-Gruppen mit Tolylisocyanat erfolgreich war. Das Fehlen einer NCO-Bande bei 2261 cm$^{-1}$ zeigt, dass kein freies 4-Tolylisocyanat im Produkt enthalten ist.

Referenzbeispiel 1: Herstellung eines bifunktionellen Polypropylenoxid-Polyoxymethylen-Block-Copolymers unter Verwendung von Paraformaldehyd als Formaldehyd-Quelle und *in situ*-Modifikation des erhaltenen Produkts mit 4-Tolylisocyanat

Die Durchführung von Referenzbeispiel 1 erfolgte in Analogie zu Beispiel 1 mit dem Unterschied, dass in der Polymerisation als Formaldehyd-Quelle Paraformaldehyd anstelle von gasförmigem Formaldehyd eingesetzt wurde.

In einem 300 ml Edelstahlreaktor mit Gaseintragsrührer wurde unter Argon ein Gemisch von 30,34 g (1.01 mmol) Paraformaldehyd, 20,02 g (20,02 mmol) PET-1 und 70 mg (0,111 mmol) Dibutylzinndilaurat (DBTL) vorgelegt und der Reaktor mit CO$_2$ auf einen Druck zwischen 17 und 19 bar beaufschlagt. Anschließend wurde der Reaktor auf eine Innentemperatur von 60 °C beheizt. Nach Erreichen der Temperatur der Druck mit CO$_2$ auf 20 bar eingestellt und das Reaktionsgemisch 4,7 h bei 60 °C gerührt. Im Anschluss wurde der Reaktor auf Raumtemperatur abgekühlt und der Druck abgelassen. Anschließend wurden bei 40 °C Innentemperatur unter Rühren 5,05 ml (5,33 g, 40,0 mmol) 4-Tolylisocyanat mit einer Flussrate von 1 ml/min zudosiert. Nach beendeter Zugabe wurde das Reaktionsgemisch bei 60 °C 16 h nachgerührt. Nach Abkühlen des Reaktors wurden 42,20 g einer wachsartigen Substanz entnommen.

Viskosität: 20,28 Pa·s

Die Viskosität des in Referenzbeispiel 1 erhaltenen Produktes war um eine Größenordnung höher als die Viskosität des in Beispiel 1 erhaltenen Produktes.

IR-Spektroskopie: v = 3302 (b, vw, v[NH]), 2972 (w), 2922 (w), 2869 (w), 1730 (b, w, v[C=O]), 1640 (vw), 1598 (vw), 1537 (b, w), 1406 (b, vw), 1406 (vw), 1374 (w), 1344 (vw), 1316 (vw), 1297 (vw), 1284 (vw), 1236 (w, PFA), 1209 (vw), 1087 (vs), 1038 (w, PFA), 963 (b, m, PFA), 928 (b, s, PFA), 908 (s, Schulter, PFA), 816 (m), 725 (w, PFA), 629 (m, PFA), 509 (w), 453 (w, PFA) cm$^{-1}$.

Ein Vergleich des IR-Spektrums des in Referenzbeispiel 1 erhaltenen Produktes mit dem IR-Spektrum von Paraformaldehyd zeigt, dass das in Referenzbeispiel 1 erhaltene Produkt im Gegensatz zu dem in Beispiel 1 erhaltenen Produkt noch Paraformaldehyd enthielt. Dies wird durch die charakteristischen, zum Teil starken Banden für Paraformaldehyd (PFA) bei 1236, 1038, 963, 928, 908, 725, 629 und 453 cm$^{-1}$ angezeigt.

Das erhaltene Produkt war im Gegensatz zu dem in Beispiel 1 erhaltenen Produkt nicht vollständig in Chloroform löslich. Es wurden 1,74 g des erhaltenen Produktgemisches in Chloroform aufgenommen und über einen Papierfilter filtriert. Als Filtrationsrückstand wurden nach Trocknung 0,19 g eines unlöslichen Feststoffes isoliert. Die Probe enthielt somit mindestens 11 Gew.-% eines unlöslichen Nebenproduktes.

Für die in Chloroform lösliche Fraktion wurde per Crel-Permeations-Chromatographie (GPC) gegen Polypropylenglykol-Standards ein zahlenmittleres Molekulargewicht $M_n$ = 753 g/mol und ein Polydispersitätsindex PDI = 1,34 ermittelt. Das GPC zeigte neben einem höhermolekularen Anteil (> 633 g/mol, 81,5 Gew.-%) mit einem zahlenmittleren Molekulargewicht $M_n$ = 1098 g/mol und einem Polydispersitätsindex PDI = 1,05 einen niedermolekularen Anteil (< 633 g/mol, 18,5 Gew.-%) mit breiter Molekulargewichtsverteilung. Dieser niedermolekulare Anteil geht nicht aus der Reaktion von PET-1 mit Formaldehyd hervor und war somit ein unerwünschtes Nebenprodukt.

Für die in $CDCl_3$ lösliche Fraktion wurden die folgenden NMR-Daten gemessen:

$^1$H-NMR-Spektroskopie (400 MHz, $CDCl_3$): δ = 1,13 (bs, 24,47 H, PET-1-$CH_3$), 1,28 (bs, 1,44 H), 2,29 (bs, 3,00 H, Tol-$CH_3$), 2,45 (bs, 0,37 H), 3,12-3,82 (m, 24,69 H, PET-1-CH/PET-1-$CH_2$), 3,82-4,14 (m, 0,70 H), 4,69-5,24 (kb, 1,99 H, $OCH_2O$/PET-1-C$\underline{H}$($CH_3$)$OCH_2O$/PET-1-C$\underline{H}_2$O-$CH_2$O), 5,42 (bs, 1,02 H, $CH_2$O), 7,08 (bs, 2,95 H, Tol-$CH_{ar}$), 7,29 (bs, 1,97 H, Tol-$CH_{ar}$), 7,51 (s, 0,07 H), 9,71 (s, 0,01 H) ppm.

$^{13}$C-APT-NMR-Spektroskopie (100 MHz, $CDCl_3$): δ = 17,0 (-), 17,3 (-), 17,5 (-), 17,7 (-), 17,8 (-), 18,1 (-), 18,2 (-), 18,5 (-), 20,8 (-,Tol-$CH_3$), 70,6 (-), 71,8 (+), 72,9 (+), 73,4 (+), 73,9 (+), 74,1 (+), 75,0 (-), 75,1 (-), 75,2 (-), 75,4 (-), 75,6 (-), 75,7 (-), 75,8 (+), 75,9 (+), 85,6 (+,$OCH_2O$), 86,1 (+,$OCH_2O$) 88,8 (+,$OCH_2O$), 92,4 (+,$OCH_2O$), 119,0 (-,Tol-$CH_{ar}$), 119,5 (-,Tol-$CH_{ar}$), 122,9 (-,Tol-$CH_{ar}$), 129,5 (-,Tol-C-NH-), 135,7 (+), 152,1-154,1 (+, viele Signale, Tol-NH-C(O)-O) ppm.

Die NMR-spektroskopischen Daten der in $CDCl_3$ löslichen Fraktion zeigen, dass ein NCOmodifiziertes Polyoxymethylen-Block-Copolymer erhalten wurden.

Das unter Verwendung von Paraformaldehyd als Formaldehyd-Quelle erhaltene Produkt wies gegenüber dem unter Verwendung von gasförmigem Formaldehyd erhaltenen erfindungsgemäßen Produkt (Beispiel 1) eine stark erhöhte Viskosität sowie eine herabgesetzte Löslichkeit auf. Die IRspektroskopischen Daten belegen, dass das in Referenzbeispiel 1 erhaltene Produkt mit Paraformaldehyd verunreinigt war. Die GPC-Daten zeigen, dass das in Referenzbeispiel 1 erhaltene Produkt weiterhin niedermolekulare Nebenprodukte enthielt. Durch die Verwendung von gasförmigem Formaldehyd können die erfindungsgemäßen Produkte somit in höherer Reinheit erhalten werden.

Referenzbeispiel 2: Herstellung eines bifunktionellen Polypropylenoxid-Polyoxymethylen-Block-Copolymeres unter Verwendung von wässriger Formaldehyd-Lösung und *in situ*-Modifikation des erhaltenen Produkts mit 4-Tolylisocyanat

Die Durchführung von Referenzbeispiel 2 erfolgte in Analogie zu Beispiel 1 mit dem Unterschied, dass als Formaldehyd-Quelle in der Polymerisation wässrige Formaldehyd-Lösung anstelle von gasförmigem Formaldehyd eingesetzt wurde.

In einem 300 ml Edelstahlreaktor mit Gaseintragsrührer wurde unter Argon ein Gemisch von 83,09 g einer 35,5%igen wässrigen Formaldehyd-Lösung (entspricht 1,01 mol Formaldehyd), 20,02 g (20,02 mmol) PET-1 und 70 mg (0,111 mmol) Dibutylzinndilaurat (DBTL) vorgelegt und der Reaktor mit $CO_2$ auf einen Druck zwischen 17 und 19 bar beaufschlagt. Anschließend wurde der Reaktor auf eine Innentemperatur von 60 °C beheizt. Nach Erreichen der Temperatur der Druck mit $CO_2$ auf 20 bar eingestellt und das Reaktionsgemisch 4,7 h bei 60 °C gerührt. Im Anschluss wurde der Reaktor auf Raumtemperatur abgekühlt und der Druck abgelassen. Anschließend wurden bei 40 °C Innentemperatur unter Rühren 5,05 ml (5,33 g, 40,0 mmol) 4-Tolylisocyanat mit einer Flussrate von 1 ml/min zudosiert. Nach beendeter Zugabe wurde das Reaktionsgemisch bei 60 °C 16 h nachgerührt. Nach Abkühlen des Reaktors wurden 88,12 g eines gelb-rötlich gefärbten, inhomogenen Flüssigkeitsgemisches mit farblosen Feststoffanteilen entnommen.

Eine Viskosität war aufgrund der Inhomogenität des Produktes nicht messbar.

IR-Spektroskopie: ν = 3400 (b, w, ν[OH]), 3308 (b, w, ν[NH]), 2968 (m), 2903 (m), 2872 (m), 2336,9 (vw), 1734 (w, ν[C=O]), 1638 (w), 1616 (w), 1595 (w), 1540 (w), 1515 (m), 1452 (w), 1406 (w), 1373 (m), 1347 (w), 1315 (w), 1295 (w), 1229 (w), 1210 (w), 1087 (vs), 1011 (s), 926 (m), 867 (w), 852 (w), 815 (m), 778 (w), 751 (w), 727 (w), 669 (w), 640 (m), 582 (m), 568 (m), 549 (w), 533 (w), 506 (m), 488 (w), 450 (w), 637 (w), 424 (vw), 409 (vw) cm$^{-1}$.

Das IR-Spektrum des in Referenzbeispiel 2 erhaltenen Produktes unterschied sich grundlegend von dem IR-Spektrum des in Beispiel 1 erhaltenen Produktes. Das IR-Spektrum des in Referenzbeispiel 2 erhaltenen Produktes zeigte zusätzliche Signale, so zum Beispiel bei 3400, 2337, 1638, 1616, 1373, 867, 751 cm$^{-1}$, sowie einen grundlegend unterschiedlichen Fingerprint-Bereich zwischen 400 und 700 cm$^{-1}$. Eine Zuordnung dieser Banden war nicht möglich. Eine im Vergleich zum Produkt aus Beispiel 1 starke OH-Bande bei 3400 cm$^{-1}$ wies darauf hin, dass signifikante Mengen an Wasser oder freien OH-Gruppen im Produkt enthalten waren. Das IR-Spektrum zeigte somit eine starke Verunreinigung mit Nebenprodukten.

Das Gel-Permeations-Chromatogramm (GPC) der in Chloroform löslichen Fraktion zeigte eine inhomogene Molekulargewichts-Verteilung. Neben einem höhermolekularen Anteil (>602 g/mol, 51 Gew.-%) mit einem zahlenmittleren Molekulargewicht von $M_n$ = 1033 g/mol und einem Polydispersitätsindex PDI = 1,05 (kalibriert gegen Polypropylenglycol-Standards) wurde ein niedermolekularer Anteil (<602 g/mol, 49 Gew.-%) mit breiter Molekulargewichtsverteilung detektiert. Dieser niedermolekulare Anteil geht nicht aus der Reaktion von PET-1 mit Formaldehyd hervor und war somit ein unerwünschtes Nebenprodukt.

Für die in $CDCl_3$ lösliche Fraktion wurden die folgenden NMR-Daten gemessen:

$^1$H-NMR-Spektroskopie (400 MHz, $CDCl_3$): δ = 0,89-0,94 (bs, 0,19 H), 0,95-1,16 (m, 29,26 H, PET-1-CH_3), 1,16-1,25 (m, 0,54 H, PET-1-CH_3), 2,09-2,29 (kb, 3,00 H, Tol-CH_3), 2,35 (bs, 0,20 H), 2,79 (d, *J* = 8,5 Hz), 2,94 (bs, 2,36 H), 3,06-3,16 (m, 0,67 H), 3,16-3,77 (kb, 39,80 H, PET-1-CH/PET-1-CH_2), 3,77-3,92 (m, 0,83 H, PET-1-CH/PET-1-CH_2), 3,92-4,03 (m, 0,13 H), 4,32-4,38 (m, 0,19 H), 4,49 (s, 0,67 H), 4,55-4,73 (kb, 7,06 H, OCH_2O/PET-1-CH(CH_3)OCH_2O/PET-1-CH_2OCH_2O), 4,73-5,00 (kb, 11,76 H, CH_2O), 5,03 (s, 0,39 H, CH_2O), 5,14-5,15 (m, 0,08 H, CH_2O), 5,26 (s, 0,39 H, CH_2O), 5,26-5,40 (m, 0,40 H, CH_2O), 6,29 (d, *J* = 15,2 Hz, 0,052 H), 6,55 (d, *J* = 8,5 Hz, 0,015 H), 6,60 (s, 0,016 H), 6,63 (s, 0,0064 H), 6,66-6,79 (m, 0,22 H), 6,79-6,87 (m, 0,24 H), 6,87-7,12 (kb, 2,47 H), 7,31 (bs, 0,10 H), 7,43 (bs, 0,14 H), 7,49 (bs, 0,12 H), 7,65 (bs, 0,14 H), 7,93 (s, 0,0066 H) ppm.

Das $^1$H-NMR-Spektrum zeigt, dass neben Polyoxymethylen-Block-Copolymeren eine Vielzahl an Nebenprodukten erhalten wurde. Im aromatische Bereich zwischen 6,2 und 8,0 ppm fand sich im Gegensatz zu dem in Beispiel 1 erhaltenen Produkt eine Vielzahl von Signalen. Es wurde kein Multiplett im Bereich 7,14-7,32 ppm mit einem Integralverhältnis von ungefähr 1,5 bis 2 zu 3 in Bezug auf das Tol-CH_3-Signal bei 2,09-2,29 ppm detektiert. Dies zeigt, dass die Reaktion des Polyoxymethylen-Block-Copolymers mit 4-Tolylisocyanat unvollständig war. Stattdessen war ein überwiegender Teil des 4-Tolylisocyanat unspezifisch zu diversen Nebenprodukten (z.B. in der Reaktion mit Wasser unter $CO_2$-Abspaltung zu Anilin und dessen Folgeprodukten mit Formaldehyd) abreagiert.

$^{13}$C-APT-NMR-Spektroskopie (100 MHz, $CDCl_3$): δ = 16,1 8-), 16,2 (-), 16,7 (-), 16,9 (-), 17,0 (-), 17,1 (-), 17,2 (-), 17,6 (-), 17,8 (-), 17,9 (-), 18,1 (-), 18,3 (-), 18,4 (-), 20,3 (-), 20,4 (-), 20,6 (-), 21,0 (-), 50,1 (-), 54,3 (-), 54,8 (-), 54,9 (-), 55,4 (-), 55,5 (-), 55,6 (-), 55,7 (-), 55,7 (-), 55,8 (-), 56,5 (-), 57,3 (-), 65,7 (-), 67,1 (-), 67,1 (-), 86,1 (+), 69,4 (+), 71,0 (+), 71,0 (-), 72,8 (+), 73,0 (+), 73,2 (+), 73,3 (-), 73,4 (+), 73,5 (-), 73,7 (-), 73,8 (+), 74,2 (-), 74,3 (+), 74,3 (+), 74,4 (+), 74,6 (-), 74,6 (-), 74,7 (-), 74,8 (-), 74,9 (-), 74,9 (-), 75,1 (-), 75,2 (-), 75,2 (-), 75,2 (-), 75,3 (-), 75,4 (-), 75,6 (+), 75,7 (+), 76,0 (+), 76,3 (-), 76,3 (-), 76,4 (-), 76,5 (-), 76,6 (-), 78,6 (+), 79,5 (+), 79,5 (+), 82,1 (+), 82,6 (+), 83,3 (+), 84,2 (+), 84,4 (+), 85,6 (+), 85,6 (+), 86,3 (+), 86,7 (+), 86,8 (+), 86,9 (+), 87,0 (+), 88,1 (+), 88,3 (+), 88,5 (+), 88,7 (+), 88,8 (+), 89,0 (+), 89,2 (+), 89,4 (+), 89,5 (+), 89,7 (+), 89,9 (+), 89,9 (+), 90,1 (+), 90,5 (+), 90,5 (+), 90,8 (+), 91,2 (+), 91,3 (+), 92,1 (+), 92,5 (+), 92,6 (+), 92,7 (+), 93,1 (+), 93,2 (+), 93,3 (+), 93,4 (+), 93,5 (+), 93,6 (+), 94,9 (+), 97,3 (+), 114,6 (-), 114,7 (-), 114,8 (-), 117,0 (-), 117,6 (-), 117,6 (-), 118,9 (-), 119,4 (-), 120,1 (-), 120,4 (-), 120,9 (-), 127,2 (-), 128,0 (-), 128,1 (-), 129,2 (-), 129,3 (-), 129,4 (-), 129,5 (-), 129,5 (-), 129,6 (-), 129,6 (-), 130,8 (-), 130,9 (-), 131,3 (+) ppm.

Die $^1$H-NMR- und $^{13}$C-APT-NMR-Spektren der löslichen Fraktion des in Referenzbeispiel 2 erhaltenen Produktes waren nicht identisch mit den $^1$H-NMR- und [13]-C-APT-NMR-Spektren des in Beispiel 1 erhaltenen Produktes. Die NMR-Spektren zeigten, dass es sich bei dem in Referenzbeispiel 2 erhaltenen Produkt um ein komplexes Produktgemisch handelte, welches neben Polyoxymethylen-Block-Copolymeren eine Vielzahl an Nebenprodukten enthielt. Eine Vielzahl an Signalen im aromatischen Bereich (6,2 bis 8,0 ppm im $^1$H-NMR-Spektrum, 114 bis 132 ppm im $^{13}$C-NMR-Spektrum) zeigt, dass die Umsetzung des Polyoxymethylen-Block-Copolymers mit 4-Tolylisocyanat unvollständig war und dieses stattdessen unspezifisch zu diversen Nebenprodukten abreagiert war.

Von einer Teilmenge von 44,03 g des erhaltenen Produktgemisches wurden die flüchtigen Komponenten bei 60 °C unter einem vermindertem Druck von 30 mbar entfernt. Es wurden 12,81 g eines wachsartigen Rückstandes erhalten, welcher nicht vollständig in Chloroform löslich war. Von diesem Rückstand wurden 1,8 g in Chloroform aufgenommen und über einen Papierfilter filtriert. Nach Entfernung der flüchtigen Komponenten des Filtrates unter vermindertem Druck wurden 0,78 g einer wachsartigen Substanz erhalten. Als Filtrationsrückstand wurden nach Trocknung 0,89 g eines unlöslichen Feststoffes isoliert. Die Probe enthielt somit mindestens 49 Gew.-% eines unlöslichen Nebenproduktes.

Für den Filtrat-Rückstand wurde eine Viskosität von 2,395 Pa·s bestimmt. Die Viskosität ist gegenüber dem in Beispiel 1 erhaltenen Produkt deutlich erhöht.

In Referenzbeispiel 2 wurde im Gegensatz zu Beispiel 1 ein inhomogenes Produktgemisch erhalten, welches einerseits einen hohen Wasseranteil und andererseits unlösliche Feststoffanteile enthielt. Das IR-Spektrum zeigte das Auftreten von Nebenprodukten. Per GPC wurde für die in Chloroform lösliche Fraktion ein hoher Gehalt an niedermolekularen Nebenprodukten detektiert. Das $^1$H-NMR-Spektrum der löslichen Fraktion zeigte, dass die Umsetzung mit 4-Tolylisocyanat zu NCO-modifizierten Polyoxymethylen-Block-Copolymeren unvollständig war und eine Vielzahl an Nebenprodukten erhalten wurde. Auch das $^{13}$C-APT-NMR-Spektrum belegte einen hohen Gehalt an Nebenprodukten. Der Vergleich mit Beispiel 1 zeigt, dass bei Einsatz von wässriger Formaldehyd-Lösung die Umsetzung mit dem Isocyanat nur unvollständig verläuft und das Isocyanat unerwünschte Nebenprodukte bildet, wenn die wässrigen Bestandteile vor diesem Schritt nicht abgetrennt werden.

Beispiel 2: Herstellung eines bifunktionellen Polypropylenoxid-Polyoxymethylen-Block-Copolymers und *ex situ*-Modifikation des erhaltenen Produktes mit 4-Tolylisocyanat

Herstellung eines bifunktionellen Polypropylenoxid-Polyoxymethylen-Block-Copolymers:

In Reaktor 1 wurde eine Suspension von 30,24 g (1,008 mol) Paraformaldehyd, 0,65 g (1,99 mmol) 4-Dodecylbenzolsulfonsäure und 8,37 g Molekularsieb 3Å in 30 ml Undecan vorgelegt. Reaktor 2 enthielt eine Lösung von 60,0 mg (0,095 mmol) Dibutylzinndilaurat (DBTL) in 20,01 g (20,01 mmol) PET-1. Über eine Bypass-Leitung an MFC 1 wurde das gesamte System bei geöffneter Brücke mit 20 bar $CO_2$ beaufschlagt. Dann wurde die Brücke geschlossen und der Druck in Reaktor 1 über ein Gasauslassventil auf 5 bar reduziert. Das Reaktionsgemisch in Reaktor 1 wurde unter Rühren bei abgesperrter Brücke auf 125 °C geheizt, das Reaktionsgemisch unter Rühren in Reaktor 2 auf 60 °C. Die Temperatur der Brücke wurde auf 170 °C eingestellt. Nach Erreichen der Reaktionstemperatur wurde der Druck in Reaktor 2 auf einen Wert zwischen 17 und 19 bar eingestellt. Der Druck in Reaktor 1 wurde über den Bypass mit $CO_2$ auf 20 bar eingestellt. Die Bypass-Leitung wurde geschlossen und an den Massenflussreglern ein konstanter Argon-Strom $\dot{V}_{aus} = \dot{V}_{in}$ = 47.6 ml/min eingestellt. Direkt im Anschluss wurde die Brücke geöffnet. Nach 4,2 h wurde die Brücke geschlossen, das System auf Raumtemperatur abgekühlt und der Druck separat in Reaktor 1 und Reaktor 2 abgelassen.

Wiegen des Reaktors 2 ergab für die Reaktion eine Gewichtszunahme von 1,58 g, was einem Formaldehyd-Übertrag von 52,6 mmol entspricht. Damit wurde das als Oligomer eingesetzte PET-1 um durchschnittlich 2,63 Formaldehyd-Einheiten pro Molekül verlängert.

Viskosität: 0,1405 Pa·s

Per Gel-Permeations-Chromatographie (GPC) gegen Polystyrol-Standard wurde ein zahlenmittleres Molekulargewicht $M_n$ = 1015 g/mol und ein Polydispersitätsindex PDI= 1,08 ermittelt. Die geringe Zunahme des gemessenen zahlenmittleren Molekulargewichts im Vergleich mit dem gemessenen zahlenmittleren Molekulargewicht des als Starter eingesetzten PET-1 ist auf unterschiedliche Wechselwirkung der Polymerketten mit dem Säulenmaterial zurückzuführen.

$^1$H-NMR-Spektroskopie (400 MHz, CDCl$_3$): δ = 0,56 - 1,02 (m, 51,72 H, CH$_3$), 2,79 - 3,60 (kb, 51,79 H, PET-1-CH/PET-1-CH$_2$), 4,38 (bs, 0,104 H, O-CH$_2$-O), 4,88 (bs, 0,106 H, O-CH$_2$-O), 4,73 - 4,75 (m, 0,986 H, O-CH$_2$O) ppm.

$^{13}$C-APT-NMR-Spektroskopie (100 MHz, CDCl$_3$): δ = 13,4 (-), 16,4 (-), 16,4 (-), 16,5 (-), 16,5 (-), 16,6 (-), 16,6 (-), 16,7 (-), 17,3 (-), 17,4 (-), 17,5 (-), 17,6 (-), 17,8 (-), 17,9 (-), 18,1 (-), 18,2 (-), 18,3 (-), 18,3 (-), 21,9 (+), 28,6 (+), 28,9 (+), 29,0 (+), 31,1(+), 72,3 (+), 72,6 (+), 72,9 (+), 73,1 (+), 73,9 (+), 74,0 (+), 74,1 (-), 74,1 (-), 74,2 (-), 74,2 (-), 74,3 (-), 74,4 (-), 74,5 (-), 74,7 (-), 74,7 (-), 75,0 (+, O-CH$_2$-O), 88,3 (+, O-CH$_2$-O), 88,8 (+, O-CH$_2$-O), 89,6 (+, O-CH$_2$-O), 92,7 (+, O-CH$_2$-O) ppm.

Die Signale im $^1$H-NMR-Spektrum zwischen 4,38 und 4,75 ppm, sowie zwischen 75,0 und 92,7 ppm im $^{13}$C-APT-NMR-Spektrum (Methylengruppen mit positiver Polarität) weisen auf die Anwesenheit von Oxymethylen-Einheiten neben Polypropylenoxid-Einheiten im Produkt hin. Das Vorliegen von mehreren Oxymethylen-Signalen mit unterschiedlicher chemischer Verschiebung weist auf unterschiedliche Kettenlängen n der Polyoxymethylen-Einheiten (CH$_2$O)$_n$ hin, und belegt damit, dass erfindungsgemäße Polypropylenoxid-Polyoxymethylen-Block-Copolymere mit ≥ 1 Oxymethylen-Gruppe pro Polyoxymethylen-Einheit erhalten wurden.

IR: v = 3455 (b, vw, v[OH]), 2970 (w), 2930 (w), 2868 (w), 1453 (w), 1373 (w), 1344 (w), 1297 (w), 1260 (vw), 1091 (vs), 1013 (w), 968 (w), 928 (w), 864 (w), 838 (w), 665 (vw), 581 (vw), 523 (vw), 469 (vw), 436 (vw), 427 (vw), 410 (vw) cm$^{-1}$.

Das Auftreten einer neuen Bande bei 968 cm$^{-1}$ weist auf das Vorliegen von Oxymethylengruppen hin.

*Ex situ*-Modifikation des Polypropylenoxid-Polyoxymethylen-Block-Copolymers mit 4-Tolylisocyanat:

In einem Rundkolben wurden 5,0 g des erhaltenen Polypropylenoxid-Polyoxymethylen-Block-Copolymeren vorgelegt und mit 1,16 ml (1,22 g, 9,16 mmol) 4-Tolylisocyanat versetzt. Das Reaktionsgemisch wurde 2 h nachgerührt. Es wurden 6,20 g eines viskosen, farblosen Öls erhalten.

Viskosität: 2,543 Pa·s

Per Gel-Permeations-Chromatographie (GPC) gegen Polystyrol-Standard wurde ein zahlenmittleres Molekulargewicht $M_n$ = 1138 g/mol und ein Polydispersitätsindex PDI=1,05 ermittelt.

$^1$H-NMR (400 MHz, CDCl$_3$): δ = 0,75-0,82 (m, 0,41 H) 0,91-1,13 (m, 27,78 H, PET-1-CH$_3$), 1,13-1,29 (m, 3,93

H, PET-1-CH$_3$), 2,18 (s, 3,00 H, Tol-CH$_3$), 3,12-3,72 (kb, 29,39 H, PET-1-CH/PET-1-CH$_2$), 3,72-3,92 (m, 0,38 H, PET-1-CH/PET-1-CH$_2$), 4,86-5,00 (m, 0,75 H, OCH$_2$O/PET-1-C$\underline{H}$(CH$_3$)OCH$_2$O/PET-1-C$\underline{H}_2$OCH$_2$O), 5,04 (s, 0,58 H, O-CH$_2$-O), 5,25-5,38 (m, 0,11 H, O-CH$_2$-O), 6,97 (d, *J* = 7,9 Hz, 2,00 H, Tol-CH$_{ar}$), 7,16-7,29 (m, 2,10 H, Tol-CH$_{ar}$) ppm.

$^{13}$C-APT-NMR (400 MHz, CDCl$_3$): δ = 14,0 (-), 16,9 (-), 17,0 (-), 17,2 (-), 17,2 (-), 17,3 (-), 17,9 (-), 17,9 (-), 18,0 (-), 18,1 (-), 18,4 (-), 20,6 (-, Tol-CH$_3$), 22,5 (+), 29,2 (+), 29,5 (+), 29,5 (+), 31,7 (+), 65,4 (-), 67,0 (-), 67,1 (-), 70,2 (-), 70,3 (-), 71,6 (+), 71,7 (+), 71,8 (+), 72,7 (+), 72,8 (+), 72,9 (+), 73,0 (+), 73,2 (+), 73,4 (+), 73,7 (+), 74,3 (+), 74,4 (+), 74,8 (-), 74,9 (-), 75,0 (-), 75,0 (-), 75,2 (-), 75,2 (-), 75,4 (-), 75,5 (-), 88,5 (+, O-CH$_2$-O), 93,4 (+, O-CH$_2$-O), 118,6 (-, Tol-CH$_{ar}$), 118,8 (-, Tol-CH$_{ar}$), 129,2 (-, Tol-CH$_{ar}$), 131,4 (+), 132,3 (+, Tol-$\underline{C}$NH), 135,7 (+, Tol-$\underline{C}$CH$_3$), 136,8 (+), 153,2 (+, O-C(O)-NH-Tol) ppm.

Die Signale zwischen 4,85 und 5,38 ppm im $^1$H-NMR-Spektrum sowie bei 88,5 und 93,4 ppm im $^{13}$C-APT-NMR-Spektrum zeigen, dass das Produkt Polyoxymethylen-Einheiten enthält.

Sowohl die $^1$H-NMR- als auch $^{13}$C-APT-NMR-Spektren zeigen, dass die Reaktion des zuvor erhaltenen und isolierten Polypropylenoxid-Polyoxymethylen-Copolymers mit 4-Tolylisocyanat zu Polyurethan-analogen Verbindungen erfolgreich war. Aus dem Vergleich der Integrale für die Methylgruppen Tol-CH$_3$ und PPG-CH$_3$ ergibt sich ein Verhältnis von 0,095 Tol-CH$_3$ zu 1 PPG-CH$_3$. Bei einer durchschnittlichen Kettenlänge von 17,02 (CH(CH$_3$)CH$_2$O)-Einheiten pro Molekül ergibt dies durchschnittlich 1,610 4-Tolylcarbamat-Einheiten pro Molekül. Die Reaktion des Polyoxymethylen-Block-Copolymers mit 4-Tolylisocyanat verlief demnach mit einem Umsatz von 80%.

IR: v = 3301 (b, vw, v[NH]), 2971 (w), 2929 (w), 2868 (w), 1728 (w, v[C=O]), 1599 (w), 1534 (w), 1453 (w), 1407 (w), 1373 (w), 1344 (w), 1315 (w), 1297 (w), 1224 (m), 1209 (w), 1091 (vs), 1017 (m), 968 (vw), 929 (w), 855 (vw), 818 (m), 768 (vw), 711 (vw), 666 (vw), 580 (vw), 543 (vw), 510 (w), 465 (vw) cm$^{-1}$.

Das IR-Spektrum ist nicht identisch mit dem IR-Spektrum von Paraformaldehyd, mit dem IR-Spektrum von PET-1 oder dem IR-Spektrum des Einsatzmaterials. Das Auftreten einer neuen Bande bei 968 cm$^{-1}$ weist auf das Vorliegen von Oxymethylengruppen hin. Die NH- und C=O-Streckschwingungen können Carbamat-Einheiten zugeordnet werden. Das Auftreten dieser Banden beweist, dass die Umsetzung der terminalen OH-Gruppen mit Tolylisocyanat erfolgreich war. Das Fehlen einer NCO-Bande bei 2261 cm$^{-1}$ zeigt, dass kein freies 4-Tolylisocyanat im Produkt enthalten war.

Beispiel 3: Herstellung eines trifunktionellen Polypropylenoxid-Polyoxymethylen-Block-Copolymers und *in situ*-Modifikation des erhaltenen Produktes mit 4-Tolylisocyanat

In Reaktor 1 wurde eine Suspension von 30,18 g (1,006 mol) Paraformaldehyd, 0,66 g (2,02 mmol) 4-Dodecylbenzolsulfonsäure und 8,43 g Molekularsieb 3Å in 30 ml Undecan vorgelegt. Reaktor 2 enthielt eine Lösung von 110,0 mg (0,174 mmol) Dibutylzinndilaurat (DBTL) in 20,01g (28,6 mmol) PET-2. Über eine Bypass-Leitung an MFC 1 wurde das gesamte System bei geöffneter Brücke mit 20 bar Argon beaufschlagt. Dann wurde die Brücke geschlossen und der Druck in Reaktor 1 über ein Gasauslassventil auf 5 bar reduziert. Das Reaktionsgemisch in Reaktor 1 wurde unter Rühren bei abgesperrter Brücke auf 125 °C geheizt, das Reaktionsgemisch in Reaktor 2 unter Rühren auf 60 °C. Die Temperatur der Brücke wurde auf 170 °C eingestellt. Nach Erreichen der Reaktionstemperatur wurde der Druck in Reaktor 2 auf einen Wert zwischen 17 und 19 bar eingestellt. Der Druck in Reaktor 1 wurde über den Bypass mit CO$_2$ auf 20 bar eingestellt. Die Bypass-Leitung wurde geschlossen und an den Massenflussreglern ein konstanter Argon-Strom $\dot{V}_{aus}$ = $\dot{V}_{in}$ = 72 ml/ min eingestellt. Direkt im Anschluss wurde die Brücke geöffnet. Nach 4,8 h wurde die Brücke geschlossen, das System auf Raumtemperatur abgekühlt und der Druck separat in Reaktor 1 und Reaktor 2 abgelassen. Anschließend wurden in Reaktor 2 unter Rühren bei einer Innentemperatur von 40 °C 10,7 ml (11,30 g, 84,9 mmol) 4-Tolylisocyanat mit einer Flussrate von 1 ml/min eingeführt. Nach beendeter Zugabe wurde das Reaktionsgemisch in Reaktor 2 bei 60 °C 16 h nachgerührt. Wiegen des Reaktors 2 vor der Entnahme des Produktes ergab für die Reaktion eine Gewichtszunahme von 3,51 g (Massendifferenz abzüglich der Masse des zugeführten Isocyanates), was einem Übertrag von 3,51 g (116,9 mmol) gasförmigen Formaldehyd entspricht. Aus Reaktor 2 wurden 28,79 g eines viskosen, farblosen Öls entnommen.

Durch einen Übertrag von 3,51 g (116,9 mmol) Formaldehyd wurde das als Oligomer eingesetzte PET-2 um durchschnittlich 4,09 Formaldehyd-Einheiten pro Molekül, bzw. 1,36 Formaldehyd-Einheiten pro Kettenende verlängert.

Viskosität: 14,65 Pa·s

Per Gel-Permeations-Chromatographie (GPC) gegen Polystyrol-Standard wurde ein zahlenmittleres Molekulargewicht M$_n$ = 816 g/mol und ein Polydispersitätsindex PDI=1,07 ermittelt.

$^1$H-NMR (400 MHz, CDCl$_3$): δ = 0,73-0,81 (m, 0,51 H), 0,91-1,11 (m, 10,48 H, PET-2-CH$_3$), 1,11-1,26 (m, 3,93 H, PET-2-CH$_3$), 2,09-2,30 (m, 3,00 H, Tol-CH$_3$), 3,12-3,71 (kb, 13,80 H, PET-2-CH/PET-2-CH$_2$), 3,71-3,82 (bs, 0,40 H, PET-2-CH/PET-2-CH$_2$), 4,65 (s, 0,04 H, O-CH$_2$-O), 4,79 (s, 0,01 H, O-CH$_2$-O), 4,83 (s, 0,01 H, O-CH$_2$-O), 4,84-4,98 (bs, 0,78 H, OCH$_2$O/PET-2-C$\underline{H}$(CH$_3$)OCH$_2$O/PET-2-C$\underline{H}_2$OCH$_2$O), 5,05 (s, 0,83 H, O-CH$_2$-O), 5,24-5,35 (m, 0,17 H, O-

CH$_2$-O), 6,92-7,04 (m, 2,16 H, Tol-CH$_{ar}$), 7,08-7,29 (m, 2,10 H, Tol-CH$_{ar}$) ppm.

$^{13}$C-APT-NMR (400 MHz, CDCl$_3$): δ = 14,1 (-), 17,0 (-), 17,3 (-), 18,2 (-), 18,2 (-), 18,5 (-), 20,8 (-, Tol-CH$_3$), 22,7 (+), 29,4 (+), 29,7 (+), 29,7 (+), 31,9 (+), 65,6 (-), 67,1 (-), 67,2 (-), 67,3 (-), 69,5 (+), 69,8 (+), 70,5 (-), 70,7 (-), 70,7 (-), 71,5 (+), 71,8 (+), 72,9 (+), 73,0 (+), 73,1 (+), 73,4 (+), 74,3 (+), 74,4 (+), 74,5 (+), 75,0 (-), 75,2 (-), 75,6 (-), 75,7 (-), 75,9 (-), 76,0 (-), 93,6 (+, O-CH$_2$-O), 118,0 (-, Tol-CH$_{ar}$), 118,7 (-, Tol-CH$_{ar}$), 119,6 (-, Tol-CH$_{ar}$), 129,4 (-, Tol-CH$_{ar}$), 129,7 (-, Tol-CH$_{ar}$), 132,6 (+, Tol-C-NH), 135,7 (+, Tol-CCH$_3$), 153-154 (+, Tol-NH-C(O)-O) ppm.

Die Signale für Oxymethylen-Gruppen O-CH$_2$-O im $^1$H- und $^{13}$C-APT-NMR-Spektrum zeigen, dass ein Block-Copolymer bestehend aus Polypropylenoxid- und Polyoxymethylen-Einheiten vorliegt.

Sowohl die $^1$H-NMR- als auch $^{13}$C-APT-NMR-Spektren zeigen, dass die Reaktion des Polypropylenoxid-Polyoxymethylen-Copolymers mit 4-Tolylisocyanat zu Polyurethan-analogen Verbindungen erfolgreich war. Aus dem Vergleich der Integrale für die Methylgruppen Tol-CH$_3$ und PPG-CH$_3$ ergibt sich ein Verhältnis von 0,208 Tol-CH$_3$ zu 1 PPG-CH$_3$. Bei einem durchschnittlichen Gehalt von 11,26 (CH(CH$_3$)CH$_2$O)-Einheiten pro Molekül ergibt dies durchschnittlich 2,342 4-Tolylcarbamat-Einheiten pro Molekül. Die Reaktion des Polyoxymethylen-Block-Copolymers mit 4-Tolylisocyanat verlief demnach mit einem Umsatz von 78%.

IR: v = 3303 (b, w, v[NH]), 2971 (w), 2928 (w), 2869 (w), 1727 (m, v[C=O]), 1638 (w), 1596 (m), 1530 (m), 1453 (w), 1407 (w), 1374 (w), 1345 (w), 1315 (m), 1296 (w), 1224 (m), 1209 (m), 1160 (m), 1080 (vs), 1018 (m), 967 (w), 930 (w), 816 (m), 768 (w), 751 (vw), 708 (vw), 640 (vw), 570 (vw), 523 (vw), 507 (m), 466 (w), 451 (vw) cm$^{-1}$.

Das IR-Spektrum ist nicht identisch mit dem IR-Spektrum von Paraformaldehyd oder mit dem IR-Spektrum von PET-2. Das Auftreten einer neuen Bande bei 967 cm$^{-1}$ weist auf das Vorliegen von Oxymethylengruppen hin. Die NH- und C=O-Streckschwingungen können Carbamat-Einheiten zugeordnet werden. Das Auftreten dieser Banden zeigt, dass die Umsetzung der terminalen OH-Gruppen mit 4-Tolylisocyanat erfolgreich war. Das Fehlen einer NCO-Bande bei 2261 cm$^{-1}$ zeigt, dass kein freies 4-Tolylisocyanat im Produkt enthalten ist.

## Patentansprüche

1. Verfahren zur Herstellung von NCO-modifizierten Polyoxymethylen-Block-Copolymeren, umfassend den Schritt der Polymerisation von Formaldehyd in Gegenwart eines Katalysators
   **dadurch gekennzeichnet, dass**
   die Polymerisation von Formaldehyd weiterhin in Gegenwart einer Starterverbindung mit mindestens 2 Zerewitinoff-aktiven H-Atomen erfolgt, wobei ein Zwischenprodukt mit einem mittels Gel-Permeations-Chromatographie gegen Polypropylenglykol-Standards bestimmten zahlenmittleren Molekulargewicht von < 4500 g/mol erhalten wird und dass
   das erhaltene Zwischenprodukt mit einem Isocyanat zu einem NCO-modifizierten Polyoxymethylen-Block-Copolymer umgesetzt wird.

2. Verfahren gemäß Anspruch 1, wobei der Katalysator ausgewählt ist aus der Gruppe der basischen Katalysatoren und/oder der Lewis-sauren Katalysatoren.

3. Verfahren gemäß Anspruch 1 oder 2, wobei die Umsetzung des Zwischenprodukts mit dem Isocyanat in Gegenwart eines Katalysators durchgeführt wird, welcher der gleiche Katalysator wie in der vorangegangenen Polymerisation von Formaldehyd ist.

4. Verfahren gemäß einem oder mehreren der Ansprüche 1 bis 3, wobei das Startermolekül ein mittels Gel-Permeations-Chromatographie gegen Polypropylenglykol-Standards bestimmten zahlenmittleres Molekulargewicht von ≥ 100 g/mol bis ≤ 3000 g/mol aufweist.

5. Verfahren gemäß einem oder mehreren der Ansprüche 1 bis 4, wobei eine oligomere Starterverbindung eingesetzt wird.

6. Verfahren gemäß einem oder mehreren der Ansprüche 1 bis 5, wobei das Startermolekül ausgewählt ist aus der Gruppe der Polyetherpolyole, Polyesterpolyole, Polyetheresterpolyole, Polycarbonatpolyole und/oder Polyacrylatpolyole.

7. Verfahren gemäß einem oder mehreren der Ansprüche 1 bis 6, wobei das Isocyanat ein aliphatisches oder aromatisches Di- oder Polyisocyanat ist.

8. Verfahren gemäß einem oder mehreren der Ansprüche 1 bis 7, wobei das Formaldehyd als gasförmiges Formaldehyd in das Reaktionsgefäß eingetragen wird.

9. Verfahren gemäß einem oder mehreren der Ansprüche 1 bis 8, wobei die Polymerisation weiterhin in Gegenwart eines Co-Monomers erfolgt.

10. NCO-modifizierte Polyoxymethylen-Block-Copolymere, erhältlich durch ein Verfahren gemäß einem oder mehreren der Ansprüche 1 bis 9.

11. NCO-modifizierte Polyoxymethylen-Block-Copolymere gemäß Anspruch 10 mit einem mittels Gel-Permeations-Chromatographie gegen Polypropylenglykol-Standards bestimmten zahlenmittleres Molekulargewicht von ≤ 15000 g/mol.

12. NCO-modifizierte Polyoxymethylen-Block-Copolymere gemäß Anspruch 10 oder 11 mit einer Viskosität bei 20 °C von ≤ 100000 mPa s.

13. Verwendung von NCO-modifizierten Polyoxymethylen-Block-Copolymeren gemäß einem oder mehreren der Ansprüche 10 bis 12 zur Herstellung von Polyurethan-Polymeren.

14. Verwendung gemäß Anspruch 13, wobei die Polyurethan-Polymere Polyurethan-Weichschaumstoffe sind.

15. Verwendung gemäß Anspruch 13, wobei die Polyurethan-Polymere thermoplastische Polyurethan-Polymere sind.

**Claims**

1. Process for preparing NCO-modified polyoxymethylene block copolymers, comprising the step of polymerizing formaldehyde in the presence of a catalyst,
   **characterized in that**
   the polymerization of formaldehyde is additionally effected in the presence of a starter compound having at least 2 Zerewitinoff-active hydrogen atoms, giving an intermediate having a number-average molecular weight of < 4500 g/mol determined by means of gel permeation chromatography against polypropylene glycol standards, and **in that** the resultant intermediate is reacted with an isocyanate to give an NCO-modified polyoxymethylene block copolymer.

2. Process according to Claim 1, wherein the catalyst is selected from the group of the basic catalysts and/or the Lewis-acidic catalysts.

3. Process according to Claim 1 or 2, wherein the reaction of the intermediate with the isocyanate is conducted in the presence of a catalyst which is the same catalyst as in the preceding polymerization of formaldehyde.

4. Process according to one or more of Claims 1 to 3, wherein the starter molecule has a number-average molecular weight of ≥ 100 g/mol to ≤ 3000 g/mol determined by means of gel permeation chromatography against polypropylene glycol standards.

5. Process according to one or more of Claims 1 to 4, wherein an oligomeric starter compound is used.

6. Process according to one or more of Claims 1 to 5, wherein the starter molecule is selected from the group of the polyether polyols, polyester polyols, polyether ester polyols, polycarbonate polyols and/or polyacrylate polyols.

7. Process according to one or more of Claims 1 to 6, wherein the isocyanate is an aliphatic or aromatic di- or polyisocyanate.

8. Process according to one or more of Claims 1 to 7, wherein the formaldehyde is introduced into the reaction vessel as gaseous formaldehyde.

9. Process according to one or more of Claims 1 to 8, wherein the polymerization is additionally effected in the presence of a comonomer.

10. NCO-modified polyoxymethylene block copolymer obtainable by a process according to one or more of Claims 1 to 9.

**11.** NCO-modified polyoxymethylene block copolymer according to Claim 10 having a number-average molecular weight of ≤ 15 000 g/mol determined by means of gel permeation chromatography against polypropylene glycol standards.

**12.** NCO-modified polyoxymethylene block copolymer according to Claim 10 or 11 having a viscosity at 20°C of ≤ 100 000 mPa s.

**13.** Use of NCO-modified polyoxymethylene block copolymers according to one or more of claims 10 to 12 for preparation of polyurethane polymers.

**14.** Use according to Claim 13, wherein the polyurethane polymers are flexible polyurethane foams.

**15.** Use according to Claim 13, wherein the polyurethane polymers are thermoplastic polyurethane polymers.

**Revendications**

**1.** Procédé de fabrication de copolymères séquencés de polyoxyméthylène modifiés par NCO, comprenant l'étape de polymérisation de formaldéhyde en présence d'un catalyseur,
**caractérisé en ce que**
la polymérisation de formaldéhyde a également lieu en présence d'un composé démarreur contenant au moins 2 atomes H actifs selon Zerevitinoff, un produit intermédiaire ayant un poids moléculaire moyen en nombre déterminé par chromatographie par perméation de gel par rapport à un étalon de polypropylène glycol < 4 500 g/mol étant obtenu, et **en ce que** le produit intermédiaire obtenu est transformé avec un isocyanate en un copolymère séquencé de polyoxyméthylène modifié par NCO.

**2.** Procédé selon la revendication 1, dans lequel le catalyseur est choisi dans le groupe des catalyseurs basiques et/ou des catalyseurs acides de Lewis.

**3.** Procédé selon la revendication 1 ou 2, dans lequel la réaction du produit intermédiaire avec l'isocyanate est réalisée en présence d'un catalyseur, qui est le même catalyseur que lors de la polymérisation précédente de formaldéhyde.

**4.** Procédé selon une ou plusieurs des revendications 1 à 3, dans lequel la molécule de départ présente un poids moléculaire moyen en nombre déterminé par chromatographie par perméation de gel par rapport à un étalon de polypropylène glycol de ≥ 100 g/mol à ≤ 3 000 g/mol.

**5.** Procédé selon une ou plusieurs des revendications 1 à 4, dans lequel un composé démarreur oligomère est utilisé.

**6.** Procédé selon une ou plusieurs des revendications 1 à 5, dans lequel la molécule de départ est choisie dans le groupe des polyéther-polyols, des polyester-polyols, des polyétherester-polyols, des polycarbonate-polyols et/ou des polyacrylate-polyols.

**7.** Procédé selon une ou plusieurs des revendications 1 à 6, dans lequel l'isocyanate est un di- ou polyisocyanate aliphatique ou aromatique.

**8.** Procédé selon une ou plusieurs des revendications 1 à 7, dans lequel le formaldéhyde est introduit dans le récipient de réaction sous la forme de formaldéhyde gazeux.

**9.** Procédé selon une ou plusieurs des revendications 1 à 8, dans lequel la polymérisation a également lieu en présence d'un comonomère.

**10.** Copolymères séquencés de polyoxyméthylène modifiés par NCO, pouvant être obtenus par un procédé selon une ou plusieurs des revendications 1 à 9.

**11.** Copolymères séquencés de polyoxyméthylène modifiés par NCO selon la revendication 10, ayant un poids moléculaire moyen en nombre déterminé par chromatographie par perméation de gel par rapport à un étalon de polypropylène glycol ≤ 15 000 g/mol.

**12.** Copolymères séquencés de polyoxyméthylène modifiés par NCO selon la revendication 10 ou 11, ayant une viscosité à 20 °C ≤ 100 000 mPas.

13. Utilisation de copolymères séquencés de polyoxyméthylène modifiés par NCO selon une ou plusieurs des revendications 10 à 12 pour la fabrication de polymères de polyuréthane.

14. Utilisation selon la revendication 13, dans laquelle les polymères de polyuréthane sont des mousses souples de polyuréthane.

15. Utilisation selon la revendication 13, dans laquelle les polymères de polyuréthane sont des polymères de polyuréthane thermoplastiques.

FIG. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1164997 A
- GB 807589 A
- EP 1418190 A1
- US 3754053 A
- US 4352914 A
- US 20020016395 A
- JP 4306215 A
- US 3575930 A